(19) Europäisches Patentamt / European Patent Office / Office européen des brevets

(11) **EP 4 227 274 A1**

(12) **EUROPEAN PATENT APPLICATION**
published in accordance with Art. 153(4) EPC

(43) Date of publication:
**16.08.2023 Bulletin 2023/33**

(21) Application number: **21877472.7**

(22) Date of filing: **30.09.2021**

(51) International Patent Classification (IPC):
$C03C\ 3/078$ (2006.01)  $A61J\ 1/05$ (2006.01)
$B65D\ 1/00$ (2006.01)  $B65D\ 1/09$ (2006.01)

(52) Cooperative Patent Classification (CPC):
**A61J 1/05; B65D 1/00; B65D 1/09; C03C 3/078**

(86) International application number:
**PCT/JP2021/036097**

(87) International publication number:
**WO 2022/075171 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 06.10.2020 JP 2020169058
25.12.2020 JP 2020217407

(71) Applicant: **Nippon Electric Glass Co., Ltd.**
**Otsu-shi, Shiga 520-8639 (JP)**

(72) Inventors:
• **KIMURA, Miki**
**Otsu-shi Shiga 520-8639 (JP)**
• **ICHINO, Genta**
**Otsu-shi Shiga 520-8639 (JP)**
• **WAKAI, Yutaro**
**Otsu-shi Shiga 520-8639 (JP)**

(74) Representative: **Henkel & Partner mbB**
**Patentanwaltskanzlei, Rechtsanwaltskanzlei**
**Maximiliansplatz 21**
**80333 München (DE)**

(54) **TUBE GLASS, PHARMACEUTICAL PRIMARY PACKAGING CONTAINER, AND ALKALI SILICATE GLASS**

(57)  Tube glass according to the present invention comprises alkali silicate glass and is characterized in that: the glass composition is substantially free of $B_2O_3$ and $Al_2O_3$; and the mass reduction amount p (mg/dm$^2$) in an alkali-resistance test in conformance with ISO 695(199105-15) is class A1.

FIG. 1

Relationship between SiO$_2$ mol% and acid resistance (QC)

EP 4 227 274 A1

**Description**

TECHNICAL FIELD

The present invention relates to a tube glass, a primary packaging container for pharmaceutical preparations, and an alkali silicate glass.

BACKGROUND ART

Borosilicate glasses having high chemical durability and excellent visibility have been used for primary packaging containers (glass containers) for pharmaceuticals, such as vials and ampules, in a related art.

Primary packaging containers for pharmaceutical preparations, such as vials or ampules, are produced by processing the glass into a container shape and then annealing the glass in an annealing furnace heated to the proximity of an annealing point to remove residual strain.

CITATION LIST

PATENT LITERATURE

Patent Literature 1: JP 2017-218353 A
Patent Literature 2: JP 6400168 B

SUMMARY OF INVENTION

TECHNICAL PROBLEM

As a method of processing a tube glass into a container shape, there is a method of forming a mouth portion, a neck portion, and a bottom portion while locally heating the tube glass with a burner or the like. In processing by burner heating, an evaporated substance of alkali borate is generated from the glass surface during burner heating, and the evaporated substance may be condensed and deposited on the inner surface of the container to form a foreign layer. The formation of this foreign layer causes a significant decrease in the chemical durability and hydrolysis resistance of the glass, and the alkali component in the glass is eluted during storage of the aqueous-based medicament. This may cause the pH change, change in quality, and the like of the aqueous-based medicament. Further, the foreign layer may be separated off from the inner surface of the container, leading to a phenomenon (delamination) in which insoluble foreign matters called flakes are formed in the aqueous-based medicament.

Accordingly, Patent Literature 1 proposes that suppression of the evaporation of alkali borate during burner heating by removing $B_2O_3$ from the glass composition of the glass container. However, glass that is free of $B_2O_3$ has a high viscosity at a high temperature, and thus the content of $Na_2O$ that reduces the viscosity in high temperature increases. As a result, the amount of alkaline elution from the glass increases, which may cause a problem of inducing the pH change of the aqueous-based medicament. When the pH of the aqueous-based medicament changes, the aqueous-based medicament may fail to exhibit the intended performance.

In addition, delamination often occurs when an aqueous-based medicament is prepared using a citrate buffer solution, a phosphate buffer solution, or the like, which exhibits a strong alkaline behavior even in the vicinity of neutrality, and filled in a glass container and stored. Therefore, the alkali resistance of the glass container is important in suppressing the delamination.

In recent years, the number of patients with Alzheimer's disease has been increasing. One of causes of Alzheimer's disease is intake of aluminum ions. When aluminum ions eluted from the glass container are taken into the body and accumulated, this leads to the possibility of an increase in the risk of developing Alzheimer's disease.

Also, when a phosphate buffer solution is stored in a glass container containing $Al_2O_3$, this may result in reaction of aluminum ions eluted from the glass with the phosphate buffer solution and formation of insoluble foreign matters.

Patent Literature 2 proposes borosilicate glass containing no $Al_2O_3$ in the glass composition, in order to suppress elution of aluminum ions. However, since this glass contains $B_2O_3$ in the glass composition, evaporation of alkali borate during container processing cannot be sufficiently suppressed.

An object of the present invention is to provide a tube glass, a primary packaging container for pharmaceutical preparations, and an alkali silicate glass, which have high alkali resistance, offer reduced risk of evaporation of alkali borate during burner heating, and reduced risk of developing Alzheimer's disease; and furthermore, the tube glass, primary packaging container and alkali silicate glass which cause little change in pH of an aqueous-based medicament, and are free of risk of formation of insoluble foreign matters due to aluminum ions eluted from the glass.

SOLUTION TO PROBLEM

The present inventors have conducted various experiments and found that the above problems can be solved by substantially removing $B_2O_3$ and $Al_2O_3$ from the glass composition and then increasing the alkali resistance to a predetermined level. The present inventors propose the present invention. That is, a tube glass according to an embodiment of the present invention includes an alkali silicate glass, in which a glass composition is substantially free of $B_2O_3$ and $Al_2O_3$, and a loss in mass p ($mg/dm^2$) in an alkali resistance test in accordance with ISO 695 (199105-15) is classified as Class A1. Note that the phrase "the glass composition is substantially free of $B_2O_3$ and $Al_2O_3$" means that the content of $B_2O_3$ in the glass composition is 0.5 mol% or less, and the content of $Al_2O_3$ is 0.5 mol% or less. The "alkali resistance test in accordance with ISO 695 (199105-15)" can be performed by the method described in the section of Examples.

In the tube glass according to an embodiment of the present invention, a total cation mass QC ($mg/dm^2$) of eluted components per unit surface area in an elution test on an acidic solution is preferably 1.6 or less. Note that the total cation mass QC ($mg/dm^2$) of eluted components per unit surface area in an elution test on an acidic solution can be calculated by the method described in the section of "Measurement of Acid Resistance". Further, the value QO obtained under the assumption that the eluted components are oxides of the eluted components can be calculated by the method described in the section of "Measurement of Acid Resistance", and the QO is preferably 3.1 or less.

In the tube glass according to an embodiment of the present invention, it is preferable that a hydrochloric acid consumption H (mL/g) to neutralize an eluate prepared by elution of an alkali component, determined in accordance with ISO 720 (1985), is classified as Class HGA1 or HGA2 in ISO 720 (1985). Note that the hydrochloric acid consumption H (mL/g) to neutralize an eluate prepared by elution of an alkali component, determined in accordance with ISO 720 (1985), can be measured by the method described in the section of Examples.

The tube glass according to an embodiment of the present invention has a glass composition containing, in mol%, 50 to 88% of $SiO_2$, 0.1 to 20% of $Li_2O+Na_2O+K_2O$, 0 to 20% of $TiO_2$, 0.005 to 12% of $ZrO_2$. Preferably, the glass composition is substantially free of $B_2O_3$ and $Al_2O_3$. Note that "$Li_2O+Na_2O+K_2O$" refers to the total content of $Li_2O$, $Na_2O$, and $K_2O$.

In the tube glass according to an embodiment of the present invention, a content of $Na_2O$ in the glass composition is preferably from 0 to 20 mol%.

In the tube glass according to an embodiment of the present invention, a content of $K_2O$ in the glass composition is preferably from 0 to 20 mol%.

In the tube glass according to an embodiment of the present invention, a content of MgO+CaO+SrO+BaO in the glass composition is preferably from 0.1 to 10 mol%. Note that "MgO+CaO+SrO+BaO" refers to the total content of MgO, CaO, SrO and BaO.

The tube glass according to an embodiment of the present invention preferably has an average transmittance of 60% or greater at an optical path length of 1 mm and a wavelength of 400 to 800 nm. Note that the "average transmittance at an optical path length of 1 mm and a wavelength of 400 to 800 nm" can be measured with a commercially available spectrophotometer.

Preferably, in the tube glass according to an embodiment of the present invention, a chemical resistance factor value, represented by {(the hydrochloric acid consumption H (mL/g) in the hydrolytic resistance test in accordance with ISO 720) × 10 + (the total cation mass QC of eluted components per unit surface area in an elution test on an acidic solution) × 10 + (the loss in mass p in an alkali resistance test in accordance with ISO 695)}, i.e., the sum of 10 times the consumption H, 10 times the mass QC, and the amount p, is 98.5 or less.

In addition, the tube glass according to an embodiment of the present invention is preferably used in a primary packaging container for pharmaceutical preparations, a laboratory instrument, and a corrosion-resistant piping for chemical plants.

The primary packaging container for pharmaceutical preparations according to an embodiment of the present invention is a primary packaging container for pharmaceutical preparations which is formed by processing tube glass, in which the tube glass is the tube glass described above.

The alkali silicate glass according to an embodiment of the present invention includes a glass composition which is substantially free of $B_2O_3$ and $Al_2O_3$, in which a chemical resistance factor value, represented by {(the hydrochloric acid consumption H (mL/g) in the hydrolytic resistance test in accordance with ISO 720) × 10 + (the total cation mass QC of eluted components per unit surface area in an elution test on an acidic solution) × 10 + (the loss in mass p in an alkali resistance test in accordance with ISO 695)}, i.e., the sum of 10 times the consumption H, 10 times the mass QC, and the amount p, is 98.5 or less.

In addition, the alkali silicate glass according to an embodiment of the present invention includes a glass composition which: contains, in mol%, 60 to 88% of $SiO_2$, 0.1 to 20% of $K_2O$, 0 to 6.5% of CaO, 0.1 to 20% of $TiO_2$,

and 0.005 to 12% of $ZrO_2$; has a molar ratio $TiO_2/(Li_2O+Na_2O+K_2O+MgO+CaO+SrO+BaO)$ of 0.3 to 3.5, a molar ratio $K_2O/ZrO_2$ of 0.9 or greater; and is substantially free of $B_2O_3$ and $Al_2O_3$. Note that "$Li_2O+Na_2O+K_2O+MgO+CaO+SrO+BaO$" refers to the total content of $Li_2O$, $Na_2O$, $K_2O$, MgO, CaO, SrO, and BaO. "$TiO_2/(Li_2O+Na_2O+K_2O+MgO+CaO+SrO+BaO)$" refers to a value obtained by dividing the content of $TiO_2$ by the total content of $Li_2O$, $Na_2O$, $K_2O$, MgO, CaO, SrO, and BaO. "$K_2O/ZrO_2$" refers to a value obtained by dividing the content of $K_2O$ by the content of $ZrO_2$.

In the alkali silicate glass according to an embodiment of the present invention, the loss in mass p ($mg/dm^2$) in an alkali resistance test in accordance with ISO 695 (199105-15) is preferably classified as Class A1.

In the alkali silicate glass according to an embodiment of the present invention, the total cation mass QC ($mg/dm^2$) of eluted components per unit surface area in an elution test on an acidic solution is preferably 1.6 or less.

Preferably, in the alkali silicate glass according to an embodiment of the present invention, the hydrochloric acid consumption H (mL/g) to neutralize an eluate prepared by elution of an alkali component, determined in accordance with ISO 720 (1985), is classified as Class HGA1 or HGA2 in ISO 720 (1985). Note that the hydrochloric acid consumption H (mL/g) to neutralize an eluate prepared by elution of an alkali component, determined in accordance with ISO 720 (1985), can be measured by the method described in the section of Examples.

The alkali silicate glass according to an embodiment of the present invention includes a glass composition which is substantially free of $B_2O_3$ and $Al_2O_3$, in which a chemical resistance factor value, represented by {(the hydrochloric acid consumption H (mL/g) in the hydrolytic resistance test in accordance with ISO 720) $\times$ 10 + (the total cation mass QC of eluted components per unit surface area in an elution test on an acidic solution) $\times$ 10 + (the loss in mass p in an alkali resistance test in accordance with ISO 695)}, i.e., the sum of 10 times the consumption H, 10 times the mass QC, and the amount p, is 98.5 or less.

The alkali silicate glass according to an embodiment of the present invention includes a glass composition which: is substantially free of $B_2O_3$ and $Al_2O_3$; contains, in mol%, 66% or greater and less than 84% of $SiO_2$, 10% or less of MgO+CaO+SrO+BaO, and 8.5% or less of $ZrO_2$; and a molar ratio $(Li_2O+Na_2O+K_2O+MgO+CaO+SrO+BaO)/SiO_2$ of 0.4 or less. Note that "$Li_2O+Na_2O+K_2O+MgO+CaO+SrO+BaO$" refers to the total content of $Li_2O$, $Na_2O$, $K_2O$, MgO, CaO, SrO, and BaO. "$Li_2O+Na_2O+K_2O+MgO+CaO+SrO+BaO)/SiO_2$" refers to a value obtained by dividing the total content of $Li_2O$, $Na_2O$, $K_2O$, MgO, CaO, SrO, and BaO by $SiO_2$.

In the alkali silicate glass according to an embodiment of the present invention, the loss in mass p ($mg/dm^2$) in an alkali resistance test in accordance with ISO 695 (199105-15) is preferably classified as Class A1.

In the alkali silicate glass according to an embodiment of the present invention, the total cation mass QC ($mg/dm^2$) of eluted components per unit surface area in an elution test on an acidic solution is preferably 1.6 or less.

Preferably, in the alkali silicate glass according to an embodiment of the present invention, the hydrochloric acid consumption H (mL/g) to neutralize an eluate prepared by elution of an alkali component, determined in accordance with ISO 720 (1985), is classified as Class HGA1 or HGA2 in ISO 720 (1985). Note that the hydrochloric acid consumption H (mL/g) to neutralize an eluate prepared by elution of an alkali component, determined in accordance with ISO 720 (1985), can be measured by the method described in the section of Examples.

In addition, the alkali silicate glass according to an embodiment of the present invention includes a glass composition which: contains, in mol%, 66% or greater and less than 84% of $SiO_2$, 1% or less of $B_2O_3$, 1% or less of $Al_2O_3$, 10% or less of MgO+CaO+SrO+BaO, and 8.5% or less of $ZrO_2$; and has a molar ratio $(Li_2O+Na_2O+K_2O+MgO+CaO+SrO+BaO)/SiO_2$ of 0.4 or less.

In the alkali silicate glass according to an embodiment of the present invention, the loss in mass p ($mg/dm^2$) in an alkali resistance test in accordance with ISO 695 (199105-15) is preferably classified as Class A1.

In the alkali silicate glass according to an embodiment of the present invention, the total cation mass QC ($mg/dm^2$) of eluted components per unit surface area in an elution test on an acidic solution is preferably 1.6 or less.

Preferably, in the alkali silicate glass according to an embodiment of the present invention, the hydrochloric acid consumption H (mL/g) to neutralize an eluate prepared by elution of an alkali component, determined in accordance with ISO 720 (1985), is classified as Class HGA1 or HGA2 in ISO 720 (1985).

ADVANTAGEOUS EFFECTS OF INVENTION

According to the present invention, it is possible to provide a tube glass, a primary packaging container for pharmaceutical preparations, and an alkali silicate glass, which have high alkali resistance, reduced risk of evaporation of alkali borate during burner heating and reduced risk of developing Alzheimer's disease; and are free of risk of formation of insoluble foreign matters due to aluminum ions eluted from the glass.

BRIEF DESCRIPTION OF DRAWINGS

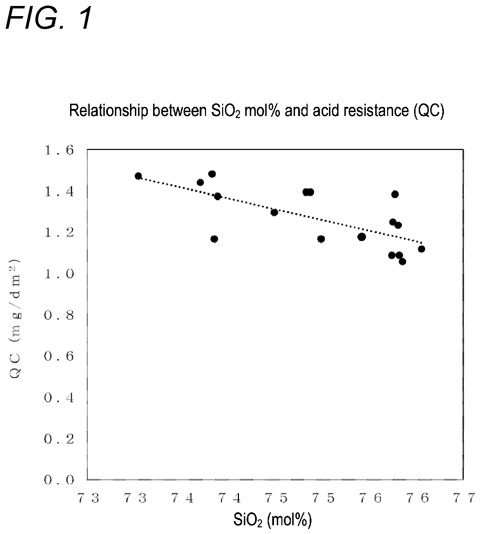

Fig. 1 is a graph in which a horizontal axis represents mol% of $SiO_2$ in various types of glass, and a vertical axis represents a total cation mass QC (mg/dm$^2$) of eluted components per unit area.

DESCRIPTION OF EMBODIMENTS

Preferred embodiments of the present invention will be described below. However, the following embodiments are merely illustrative, and the present invention is not limited to the following embodiments.

The tube glass according to an embodiment of the present invention is an alkali silicate glass, and preferably has a glass composition which contains, in mol%, 50 to 88% of $SiO_2$, 0.1 to 20% of $Li_2O+Na_2O+K_2O$, 0 to 20% of $TiO_2$, 0.005 to 12% of $ZrO_2$. Preferably, the glass composition is substantially free of $B_2O_3$ and $Al_2O_3$. Hereinafter, the reason why the composition range of each component is defined as described above will be described. In the description of the content of each component, indication in % refers to mol% unless otherwise indicated.

$SiO_2$ is a component that forms a glass network, and is a component that increases chemical resistance, particularly acid resistance. The content of SiOz is preferably 50% or greater, 55% or greater, 60% or greater, 65% or greater, 66% or greater, 70% or greater, 72% or greater, particularly 74% or greater, and is preferably 88% or less, 85% or less, less than 84%, 83% or less, 81% or less, 79% or less, particularly 77% or less. When the content of $SiO_2$ is too small, the structure of the glass becomes brittle, and chemical resistance tends to decrease. Meanwhile, when the content of $SiO_2$ is too large, meltability tends to decrease. Further, the viscosity of the molten glass increases, and thus processing of the glass into the tube glass becomes difficult.

The content of $Li_2O+Na_2O+K_2O$ is preferably 0.1% or greater, 0.5% or greater, 1% or greater, 3% or greater, 5% or greater, 6% or greater, 7% or greater, particularly 8% or greater, and is preferably 20% or less, 19.5% or less, 19% or less, 16% or less, 14% or less, 12% or less, 11% or less, 10.5% or less, particularly 10% or less. When the content of $Li_2O+Na_2O+K_2O$ is too small, the viscosity of the glass increases, and the productivity and processability of the tube glass may be reduced. Meanwhile, when the content of $Li_2O+Na_2O+K_2O$ is too large, the amount of alkaline elution from the glass increases, and the pH change of the aqueous-based medicament is likely to be induced.

$Li_2O$ is a component that lowers the viscosity of the glass and enhances meltability and formability. The content of $Li_2O$ is preferably 0% or greater, 0.1% or greater, particularly 2% or greater, and is preferably 10% or less, 8% or less, 6% or less, less than 4%, 3.5% or less, 3% or less, particularly 2.5% or less. When the content of $Li_2O$ is too large, the amount of alkaline elution from the glass increases, and the pH change of the aqueous-based medicament is likely to be induced.

$Na_2O$ is a component that lowers the viscosity of the glass and enhances meltability and formability. The content of $Na_2O$ is preferably 0% or greater, 0.1% or greater, 3% or greater, particularly 4% or greater, and is preferably 20% or less, 18% or less, 16% or less, particularly 13% or less. When the content of $Na_2O$ is too large, the amount of alkaline elution from the glass increases, and the pH change of the aqueous-based medicament is likely to be induced. Also, devitrified crystals including SiOz-NazO-ZrOz may precipitate, leading to a reduction in the productivity of the tube glass.

Similarly to $Li_2O$ and NazO, $K_2O$ is a component that lowers the viscosity of the glass and enhances meltability and formability. The content of $K_2O$ is preferably 0% or greater, 0.1% or greater, 3% or greater, 5% or greater, 7% or greater, particularly 8% or greater, and is preferably 20% or less, 18% or less, 15% or less, 12% or less, 11.5% or less, particularly 11% or less. When the content of $K_2O$ is too large, the amount of alkaline elution from the glass increases, and the pH change of the aqueous-based medicament is likely to be induced.

TiOz is a component that lowers the viscosity of the glass and enhances chemical resistance, particularly alkali resistance. The content of $TiO_2$ is preferably 0% or greater, 0.1% or greater, 1% or greater, 2% or greater, 2.5% or greater, 3% or greater, 4.4% or greater, 5% or greater, 6% or greater, particularly 7% or greater, and is preferably 20% or less, 18% or less, 16% or less, 15% or less, 14% or less, 12% or less, 11% or less, 10% or less, 9.5% or less, 9% or less, particularly 8.5% or less. When the content of TiOz is too low, the viscosity of the glass increases, and the productivity and processability of the tube glass may be reduced. Meanwhile, when the content of $TiO_2$ is too large, the coloring of the tube glass may become pronounced, and further the glass is devitrified, which may lead to a reduction in the productivity and processability of the tube glass.

ZrOz is a component that enhances chemical resistance, particularly alkali resistance. It is also one of the components that can be eluted, as impurities from the refractory used in the melting facility, into the glass component. Exceptionally, when the glass composition is substantially free of $ZrO_2$, the risk to health can be reduced. Note that the phrase "the glass composition is substantially free of $ZrO_2$" means that the content of $ZrO_2$ in the glass composition is 0.005 mol% or less. The content of $ZrO_2$ is preferably 0% or greater, 0.001% or greater, 0.005% or greater, 0.01%, 0.05% or greater, 0.1% or greater, 1% or greater, 2.0% or greater, 2.5% or greater, 3% or greater, 3.5% or greater, 4.4% or greater, particularly 5% or greater, 6% or greater, and is preferably 13% or less, 10% or less, 9% or less, 8.5 or less, 7% or less, 6% or less, particularly 5% or less. When the content of $ZrO_2$ is too small, sufficient chemical resistance cannot be exhibited, and the amount of components eluted from the glass increases, and this may cause change in quality of the aqueous-based medicament. Meanwhile, when the content of $ZrO_2$ is too large, the glass is devitrified, which may lead to a reduction in the productivity and processability of the tube glass.

$B_2O_3$ is a component that lowers the viscosity of the glass and enhances meltability and formability. However, $B_2O_3$ is a component that evaporates together with the alkali component in the glass due to burner heating during container processing, and may contaminate the inner surface of the container. Accordingly, the content of $B_2O_3$ should be regulated to a level at which $B_2O_3$ is not substantially contained (0.5% or less), and is preferably 0.4% or less, particularly 0.3% or less.

When it is desired to lower the viscosity of glass, $B_2O_3$ may be intentionally added in a range of 1% or less.

$Al_2O_3$ is a component that enhances chemical resistance, and is also a component that suppresses devitrification. However, when the content of $Al_2O_3$ is too large, the $Al_2O_3$ is eluted, as aluminum ions, into the aqueous-based medicament, and introduced into the body by injection or the like. The aluminum ions introduced into the body may increase the risk of developing Alzheimer's disease. A phosphate buffer solution is stored in a glass container containing $Al_2O_3$, as a result of which aluminum ions eluted from the glass may react with the phosphate buffer solution to generate insoluble foreign matters. Accordingly, the content of $Al_2O_3$ should be regulated to a level at which $Al_2O_3$ is not substantially contained (i.e., 0.5% or less), and is preferably 0.4% or less, particularly 0.3% or less.

The refractory used in the melting facility may also contain $Al_2O_3$. In this case, $Al_2O_3$ from the refractory may be mixed into the glass and cause $Al_2O_3$ to be unintentionally mixed into the glass. In such a case, $Al_2O_3$ may be contained in a range of 1% or less. In addition, when it is exceptionally desired to improve hydrolytic resistance, $Al_2O_3$ may be contained in a range of 1% or less.

In addition to the above components, for example, the following components may be introduced.

The content of MgO+CaO+SrO+BaO is preferably 12% or less, 10% or less, 8.5% or less, 8% or less, 7% or less, 6% or less, 5% or less, 4.5% or less, 4% or less, 3.8% or less, 2% or less, 1.5% or less, particularly 1.3% or less. When the content of MgO+CaO+SrO+BaO is too small, the viscosity of the glass increases, and the productivity and processability of the tube glass may be reduced. Meanwhile, when the content of MgO+CaO+SrO+BaO is too large, the amount of alkaline elution from the glass increases, and the pH change of the aqueous-based medicament is likely to be induced.

MgO is a component that lowers the viscosity of the glass and enhances meltability and formability. The content of MgO is preferably 5% or less, 4.8% or less, 4% or less, 3.5% or less, 3% or less, 2% or less, 1.5% or less, particularly 1% or less, and is preferably 0% or greater, 0.05% or greater, 0.1% or greater, particularly 0.3% or greater. When the content of MgO is too small, the viscosity of the glass increases, and the productivity and processability of the tube glass may be reduced. When the content of MgO is too large, the amount of alkaline elution from the glass increases, and the pH change of the aqueous-based medicament is likely to be induced.

CaO is a component that lowers the viscosity of the glass and enhances meltability and formability. The content of CaO is preferably 7% or less, 6.5% or less, 5% or less, 4.5% or less, 3.8% or less, 3.5% or less, 3% or less, 2% or less, 1.8% or less, 1.5% or less, particularly 1% or less, and is preferably 0% or greater, 0.1%, 0.5% or greater, 0.7% or greater, particularly 1% or greater. When the content of CaO is too small, the viscosity of the glass increases, and the productivity and processability of the tube glass may be reduced. When the content of CaO is too large, the amount of alkaline elution from the glass increases, and the pH change of the aqueous-based medicament is likely to be induced.

SrO is a component that lowers the viscosity of the glass and enhances meltability and formability. The content of SrO is preferably 5% or less, 4.7% or less, 4% or less, 3.3% or less, 3% or less, 2% or less, 1.6% or less, particularly 1% or less. When the content of SrO is too large, the amount of alkaline elution from the glass increases, and the pH change of the aqueous-based medicament is likely to be induced.

BaO is a component that lowers the viscosity of the glass and enhances meltability and formability. The content of BaO is preferably 5% or less, 4.7% or less, 4% or less, 3.3% or less, 3% or less, 2% or less, 1.6% or less, particularly 1% or less, and is preferably 0% or greater, 0.05% or greater, 0.1% or greater, particularly 0.3% or greater. When the content of BaO is too small, the viscosity of the glass increases, and the productivity and processability of the tube glass may be reduced. When the content of BaO is too large, the amount of alkaline elution from the glass increases, and the pH change of the aqueous-based medicament is likely to be induced. In the case of an aqueous-based medicament containing a sulfate, the sulfate precipitates as barium sulfate, resulting in the formation of insoluble foreign matters.

ZnO is a component that reduces the viscosity of glass to improve meltability and moldability, but when the added amount of the component is too large, the devitrification resistance and the chemical durability may deteriorate. The content of ZnO is preferably 10% or less, 8% or less, 6% or less, less than 4.9%, 4.5% or less, 4% or less, 3% or less, 2.5% or less, particularly 2% or less, and is 0% or greater, 0.5% or greater, 1% or greater, particularly 1.5% or greater.

$Fe_2O_3$ is a component that is present as impurities, and is a component that enhances the coloring of the glass. The content of $Fe_2O_3$ is preferably 0.1% or less, more preferably 0.09% or less, particularly preferably 0.08% or less, and is preferably 0% or greater, more preferably 0.001% or greater, particularly preferably 0.003% or greater. When the content of $Fe_2O_3$ is too large, the coloring of the glass becomes too strong. The smaller the content of $Fe_2O_3$ is, the more the coloring can be suppressed, so this is preferred. However, for example, in order to reduce the content to a range of less than 0.003%, it is necessary to use an expensive high-purity raw material, leading to an increase in the batch cost.

SnOz is a component that acts as a fining agent. The content of $SnO_2$ is preferably 3% or less, 2% or less, more preferably 1% or less, particularly preferably 0.5% or less, and is preferably 0% or greater, 0.001% or greater, still more preferably 0.005% or greater, particularly preferably 0.01% or greater. When the content of SnOz is too small, the amount of bubble residue in the tube glass increases, which may contribute to poor appearance. Meanwhile, when the content of $SnO_2$ is too large, the glass is colored, which may contribute to poor transmittance.

SOs, $Cl_2$, $F_2$, $Sb_2O_3$ or the like can be used as a fining agent, in addition to SnOz. One kind of these components may be used alone, or multiple kinds thereof may be mixed and used. The content of each of the components is preferably 3% or less, 2% or less, 1.5% or less, 1% or less, 0.8% or less, 0.5% or less, 0.3% or less, particularly 0.1% or less, and is preferably 0.001% or greater, particularly 0.003% or greater. When the content of each of the components is too large, it may pose the increased risk of the corrosion in the facility and environmental contamination. When the content of each of the components is too small, the amount of bubble residue in the tube glass increases, which may contribute to poor appearance.

The molar ratio $TiO_2/(Li_2O+Na_2O+K_2O+MgO+CaO+SrO+BaO)$ is preferably 0.3 or greater, 0.5 or greater, 0.7 or greater, 0.9 or greater, 1 or greater, particularly 1.1 or greater, and is preferably 5.5 or less, 3.5 or less, 3 or less, 2.5 or less, 2 or less, 1.5 or less, particularly 1.3 or less. This configuration achieves the effect of hydrolytic resistance improvement more efficiently.

The molar ratio $K_2O/ZrO_2$ is preferably 0.1 or greater, 0.3 or greater, 0.5 or greater, 0.7 or greater, 0.8 or greater, 0.85 or greater, or 0.9 or greater and 100 or less. This configuration achieves the effect of alkali resistance improvement more efficiently.

The molar ratio $(Li_2O+Na_2O+K_2O+MgO+CaO+SrO+BaO)/SiO_2$ is preferably 0.4 or less, 0.35 or less, 0.30 or less, 0.28 or less, 0.26 or less, 0.25 or less, particularly 0.23 or less, and is preferably 0 or greater, more than 0, 0.05 or greater, 0.1 or greater, 0.1 or greater, particularly 0.15 or greater. When the molar ratio $(Li_2O+Na_2O+K_2O+MgO+CaO+SrO+BaO)/SiO_2$ is large, the viscosity of the glass decreases, thereby making glass processing easier. However, the amount of alkaline elution increases and the pH of the aqueous-based medicament may be changed. Whereas, when the molar ratio $(Li_2O+Na_2O+K_2O+MgO+CaO+SrO+BaO)/SiO_2$ is small, the amount of alkaline elution decreases, but the viscosity of the glass increases, causing a decrease in processability.

Each of HfOz, $SO_3$, $Y_2O_3$ and $P_2O_5$ as impurities may be contained up to 0.5%, and it is preferable that the content of each of the components is particularly from 0.001 to 0.1%.

In addition, $Cr_2O_3$, PbO, $La_2O_3$, $Bi_2O_3$, $MoO_3$, $WO_3$, $Nb_2O_3$, and PbOz each may be added as impurities in an amount of 3% or less, 2% or less, 1% or less, less than 1%, particularly 0.5% or less.

As impurities, components such as $H_2$, COz, CO, HzO, He, Ne, Ar, and $N_2$ each may be present up to 0.1%. Further, it is preferable that the mixed amount of noble metal elements (such as Pt, Rh, Au, and Ir) is 500 ppm or less, particularly 300 ppm or less.

The tube glass according to an embodiment of the present invention preferably has the following characteristics.

In the tube glass according to an embodiment of the present invention, the chemical resistance factor value, represented by {(the hydrochloric acid consumption H (mL/g) in the hydrolytic resistance test in accordance with ISO 720) $\times$ 10 + (the total cation mass QC of eluted components in an elution test on an acidic solution) $\times$ 10 + (the loss in mass p in an alkali resistance test in accordance with ISO 695)}, i.e., the sum of 10 times the consumption H, 10 times the mass QC, and the amount p, is preferably 98.5 or less, 90 or less, 80 or less, 70 or less, 60 or less, 50 or less, 45 or less, particularly 40 or less. When the chemical resistance factor value is too large, the glass tends to have poor chemical resistance.

The loss in mass p ($mg/dm^2$) in an alkali resistance test in accordance with ISO 695 (199105-15) is preferably 140 or less, 100 or less, 75 or less, 60 or less, 45 or less, 35 or less, 30 or less, particularly 27 or less. When the loss in mass p is too large, the alkali resistance decreases. When the loss in mass p ($mg/dm^2$) is 75 or less, this is classified as Class A1.

When the elution test is performed on an acidic solution, the total cation mass QC ($mg/dm^2$) of eluted components is preferably 3 or less, 2.5 or less, 2 or less, 1.7 or less, 1.5 or less, particularly 1.3 or less.

The hydrochloric acid consumption H (mL/g) to neutralize an eluate prepared by elution of an alkali component, determined in accordance with ISO 720 (1985), is preferably 0.5 or less, 0.4 or less, 0.3 or less, 0.2 or less, particularly 0.1 or less. When the hydrochloric acid consumption H is too large, the hydrolytic resistance deteriorates. A hydrochloric acid consumption H of 0.1 or less corresponds to Class HGA1, and a hydrochloric acid consumption H of 0.85 or less corresponds to Class HGA2.

The liquidus temperature is preferably 1300°C or lower, 1250°C or lower, 1200°C or lower, 1150°C or lower, particularly 1100°C or lower. When the liquidus temperature increases, the glass is likely to be devitrified during processing of the glass into the tube glass.

The thermal expansion coefficient is an important parameter indicating thermal shock resistance. The thermal expansion coefficient in a temperature range of 30 to 380°C is preferably $85 \times 10^{-7}$/°C or less, particularly 45 to $80 \times 10^{-7}$/°C. When the thermal expansion coefficient is too high, the thermal shock resistance is likely to decrease.

The temperature at $10^{2.5}$ dPa·s is preferably 1650°C or lower, 1600°C or lower, 1590°C or lower, 1580°C or lower, particularly 1570°C or lower. When the temperature at $10^{2.5}$ dPa·s is too high, the glass is unlikely to be melted.

The temperature at $10^{4.0}$ dPa·s is preferably 1350°C or lower, 1300°C or lower, 1290°C or lower, 1280°C or lower, 1270°C or lower, particularly 1265°C or lower. When the temperature at $10^{4.0}$ dPa·s is too high, the glass not readily processed into the tube glass.

The average transmittance at an optical path length of 1 mm and a wavelength of 400 to 800 nm is preferably 60% or greater, 70% or greater, 75% or greater, particularly 85% or greater. When the average transmittance at an optical path length of 1 mm and a wavelength of 400 to 800 nm is too low, it is difficult to visually recognize the change in quality of the medicament.

Next, a method for manufacturing the glass tube according to an embodiment of the present invention will be described. The following description is an example using a Danner process.

First, glass raw materials are compounded in accordance with a desired glass composition and a glass batch is prepared. Next, the glass batch is continuously fed into a melting kiln at 1550 to 1700°C, melted, and fined to form molten glass. Then, the molten glass is wound around a rotating refractory while blowing the air from an end of the refractory, and the glass is drawn out from the end. The drawn tubular glass is cut into a predetermined length to form a glass tube. The glass tube thus formed is used to manufacture vials or ampules.

The primary packaging container for pharmaceutical preparations according to an embodiment of the present invention is a primary packaging container for pharmaceutical preparations which is formed by processing tube glass, and the tube glass is the tube glass described above.

As another aspect, the alkali silicate glass according to an embodiment of the present invention includes a glass composition which is substantially free of $B_2O_3$ and $Al_2O_3$, in which a chemical resistance factor value, represented by {(the hydrochloric acid consumption H (mL/g) in the hydrolytic resistance test in accordance with ISO 720) $\times$ 10 + (the total cation mass QC of eluted components per unit surface area in an elution test on an acidic solution) $\times$ 10 + (the loss in mass p in an alkali resistance test in accordance with ISO 695)}, is 98.5 or less. As another aspect, the alkali silicate glass according to an embodiment of the present invention includes a glass composition which: contains, in mol%, 60 to 88% of SiOz, 0.1 to 20% of KzO, 0 to 6.5% of CaO, 0.1 to 20% of TiOz, and 0.1 to 12% of $ZrO_2$; has a molar ratio $TiO_2/(Li_2O+Na_2O+K_2O+MgO+CaO+SrO+BaO)$ of 0.3 to 3.5, a molar ratio $K_2O/ZrO_2$ of 0.9 or greater; and is substantially free of $B_2O_3$ and $Al_2O_3$. The technical features of the alkali silicate glass according to an embodiment of the present invention are similar to the technical features of the tube glass according to an embodiment of the present invention, so the detailed description is omitted herein.

As another aspect, the alkali silicate glass according to an embodiment of the present invention includes a glass composition which contains 1% or less of $B_2O_3$ and 1% or less of $Al_2O_3$, in which a chemical resistance factor value, represented by {(the hydrochloric acid consumption H (mL/g) in the hydrolytic resistance test in accordance with ISO 720) $\times$ 10 + (the total cation mass QC of eluted components per unit surface area in an elution test on an acidic solution) $\times$ 10 + (the loss in mass p in an alkali resistance test in accordance with ISO 695)}, is 98.5 or less. Further, as another aspect, the alkali silicate glass according to an embodiment of the present invention includes a glass composition which: contains, in mol%, 66% or greater and less than 84% of $SiO_2$, 1% or less of $B_2O_3$, 1% or less of $Al_2O_3$, 10% or less of MgO+CaO+SrO+BaO, and 8.5% or less of ZrOz; and has a molar ratio $(Li_2O+Na_2O+K_2O+MgO+CaO+SrO+BaO)/SiO_2$ of 0.4 or less. The technical features of the alkali silicate glass according to an embodiment of the present invention are similar to the technical features of the tube glass according to an embodiment of the present invention, so the detailed description is omitted herein.

Examples

The present invention will be described below based on Examples. However, the present invention is not limited to the following examples, and the following examples are merely illustrative.

Tables 1 to 11 shows Examples (Sample Nos. 1 to 14, 16 to 28, and 30 to 107) and Comparative Examples (Sample Nos. 15 and 29) of the present invention. In each of the tables, the numerical values in parentheses are predicted values obtained by factor calculation of each component.

Table 1

| | | Unit | No. 1 | No. 2 | No. 3 | No. 4 | No. 5 | No. 6 | No. 7 | No. 8 | No. 9 | No. 10 |
|---|---|---|---|---|---|---|---|---|---|---|---|---|
| Glass composition | $SiO_2$ | mol% | 68.70 | 70.73 | 72.69 | 74.55 | 76.65 | 78.63 | 72.38 | 78.17 | 78.69 | 72.65 |
| | $B_2O_3$ | | 0.05 | 0.01 | 0.0 | 0.08 | 0.1 | 0.0 | 0.3 | 0.5 | 0.05 | 0.1 |
| | $Al_2O_3$ | | 0.01 | 0.0 | 0.05 | 0.1 | 0.0 | 0.08 | 0.0 | 0.0 | 0.01 | 0.005 |
| | $Li_2O$ | | 0.0 | 0.0 | 0.0 | 0.0 | 0.0 | 0.0 | 0.0 | 0.0 | 0.0 | 0.0 |
| | $Na_2O$ | | 16.5 | 16.5 | 16.5 | 14.5 | 12.5 | 10.5 | 10.5 | 9.5 | 8.5 | 8.5 |
| | $K_2O$ | | 0.0 | 0.0 | 0.0 | 0.0 | 0.0 | 0.0 | 0.0 | 0.0 | 0.0 | 0.0 |
| | MgO | | 0.0 | 0.2 | 0.0 | 0.2 | 0.1 | 0.0 | 0.7 | 0.3 | 0.1 | 0.3 |
| | CaO | | 0.7 | 0.5 | 0.6 | 0.1 | 0.5 | 0.7 | 0.0 | 0.4 | 0.7 | 0.7 |
| | SrO | | 0.0 | 0.0 | 0.0 | 0.0 | 0.0 | 0.0 | 0.0 | 0.0 | 0.0 | 0.0 |
| | BaO | | 0.0 | 0.0 | 0.1 | 0.4 | 0.1 | 0.0 | 0.0 | 0.0 | 0.0 | 0.0 |
| | $TiO_2$ | | 6.4 | 6.4 | 6.4 | 6.4 | 6.4 | 6.4 | 6.4 | 7.4 | 8.4 | 8.4 |
| | $ZrO_2$ | | 7.6 | 5.6 | 3.6 | 3.6 | 3.6 | 3.6 | 9.6 | 3.6 | 3.6 | 9.6 |
| | $Fe_2O_3$ | | 0.005 | 0.020 | 0.020 | 0.030 | 0.010 | 0.050 | 0.080 | 0.090 | 0.008 | 0.010 |
| | $SnO_2$ | | 0.0 | 0.0 | 0.0 | 0.0 | 0.0 | 0.0 | 0.0 | 0.0 | 0.0 | 0.0 |
| | $SO_3$ | | 0.040 | 0.040 | 0.040 | 0.040 | 0.040 | 0.040 | 0.040 | 0.040 | 0.040 | 0.040 |
| | ZnO | | 0.0 | 0.0 | 0.0 | 0.0 | 0.0 | 0.0 | 0.0 | 0.0 | 0.0 | 0.0 |
| | $HfO_2$ | | Not measured | Not measured | Not measured | Not measured | Not measured | Not measured | Not measured | Not measured | Not measured | Not measured |
| | $P_2O_5$ | | Not measured | Not measured | Not measured | Not measured | Not measured | Not measured | Not measured | Not measured | Not measured | Not measured |
| | $Y_2O_3$ | | Not measured | Not measured | Not measured | Not measured | Not measured | Not measured | Not measured | Not measured | Not measured | Not measured |

| | | Unit | No. 1 | No. 2 | No. 3 | No. 4 | No. 5 | No. 6 | No. 7 | No. 8 | No. 9 | No. 10 |
|---|---|---|---|---|---|---|---|---|---|---|---|---|
| Glass composition | F | mol% | 0.00 | 0.00 | 0.00 | 0.00 | 0.00 | 0.00 | 0.00 | 0.00 | 0.00 | 0.00 |
| | Cl | | 0.00 | 0.00 | 0.00 | 0.00 | 0.00 | 0.00 | 0.00 | 0.00 | 0.00 | 0.00 |
| | $Li_2O+Na_2O+K_2O$ | | 16.5 | 16.5 | 16.5 | 14.5 | 12.5 | 10.5 | 10.5 | 9.5 | 8.5 | 8.5 |
| | MgO+CaO+SrO+BaO | | 0.7 | 0.7 | 0.7 | 0.7 | 0.7 | 0.7 | 0.7 | 0.7 | 0.8 | 1.0 |
| | $K_2O/ZrO_2$ | - | 0.0 | 0.0 | 0.0 | 0.0 | 0.0 | 0.0 | 0.0 | 0.0 | 0.0 | 0.0 |
| | $TiO_2/(Li_2O+Na_2O+K_2O+MgO+CaO+SrO+BaO)$ | - | 0.4 | 0.4 | 0.4 | 0.4 | 0.5 | 0.6 | 0.6 | 0.7 | 0.9 | 0.9 |
| | $(Li_2O+Na_2O+K_2O+MgO+CaO+SrO+BaO)/SiO_2$ | - | 0.25 | 0.24 | 0.24 | 0.20 | 0.17 | 0.14 | 0.15 | 0.13 | 0.12 | 0.13 |
| Hydrolytic resistance (Hydrochloric acid consumption H) | ISO 720 (1985) | mL/g | 0.310 | 0.427 | 0.635 | 0.428 | 0.277 | 0.189 | 0.100 | 0.147 | 0.118 | 0.073 |
| | Class | - | HGA2 | HGA2 | HGA2 | HGA2 | HGA2 | HGA2 | HGA1 | HGA2 | HGA2 | HGA1 |
| Acid resistance (Elution evaluation QC, QO) | QC: Σ eluted components (cation mass) | mg/dm² | Not measured | Not measured | Not measured | Not measured | Not measured | Not measured | Not measured | Not measured | Not measured | Not measured |
| | QO: Σ eluted components (oxide mass) | mg/dm² | Not measured | Not measured | Not measured | Not measured | Not measured | Not measured | Not measured | Not measured | Not measured | Not measured |
| Alkali resistance (loss in mass p) | ISO 695 (199605-15) | mg/dm² | 12 | 17 | 26 | 22 | 21 | 20 | 9 | 19 | 19 | 11 |
| | Class | - | A1 | A1 | A1 | A1 | A1 | A1 | A1 | A1 | A1 | A1 |

EP 4 227 274 A1

(continued)

| | | Unit | No. 1 | No. 2 | No. 3 | No. 4 | No. 5 | No. 6 | No. 7 | No. 8 | No. 9 | No. 10 |
|---|---|---|---|---|---|---|---|---|---|---|---|---|
| Chemical resistance factor value | $H \times 10 + QC \times 10 + \rho$ | - | Not measured | Not measured | Not measured | Not measured | Not measured | Not measured | Not measured | Not measured | Not measured | Not measured |
| Liquidus temperature | | °C | 1094 | 1019 | 937 | 1072 | 1190 | 1279 | > 1450 | 1308 | 1332 | > 1458 |
| Thermal expansion coefficient | 20 to 300°C | $10^{-7}/$°C | 78.1 | 79.1 | 80.9 | 73.3 | 65.9 | 58.3 | 57.5 | 55.0 | 51.7 | 51.3 |
| | 30 to 300°C | | 78.4 | 79.3 | 81.2 | 73.5 | 66.1 | 58.5 | 57.7 | 55.2 | 51.8 | 51.5 |
| | 30 to 380°C | | 79.4 | 80.3 | 82.2 | 74.4 | 66.8 | 59.0 | 58.5 | 55.6 | 52.2 | 52.2 |
| Viscosity characteristics | $10^{2.5}$ dPa·s | °C | 1354 | 1344 | 1324 | 1367 | 1431 | 1493 | 1505 | 1523 | 1546 | 1520 |
| | $10^{3.0}$ dPa·s | | 1261 | 1245 | 1218 | 1257 | 1313 | 1366 | 1400 | 1394 | 1414 | 1408 |
| | $10^{4.0}$ dPa·s | | 1117 | 1092 | 1057 | 1090 | 1134 | 1179 | 1238 | 1201 | 1215 | 1238 |
| | Strain point | | 833 | 801 | 769 | 788 | 812 | 839 | 932 | 850 | 860 | Not measured |
| | Annealing point | | 652 | 622 | 593 | 605 | 621 | 638 | 720 | 646 | 653 | 687 |
| | Softening point | | 612 | 583 | 554 | 566 | 580 | 596 | 671 | 604 | 611 | 640 |
| Average transmittance (thickness: 1 mm) | 400 to 800 nm | % | 89 | 89 | 89 | Not measured | Not measured | Not measured | 88 | 88 | 86 | 85 |

Table 2

| | | Unit | No. 11 | No. 12 | No. 13 | No. 14 | No. 15 | No. 16 | No. 17 | No. 18 | No. 19 | No. 20 |
|---|---|---|---|---|---|---|---|---|---|---|---|---|
| Glass composition | $SiO_2$ | mol% | 80.59 | 82.59 | 80.50 | 80.58 | 76.69 | 79.90 | 75.69 | 77.42 | 74.40 | 77.42 |
| | $B_2O_3$ | | 0.0 | 0.0 | 0.0 | 0.0 | 10.0 | 0.3 | 0.5 | 0.2 | 0 | 0 |
| | $Al_2O_3$ | | 0.0 | 0.0 | 0.07 | 0.0 | 4.5 | 0.5 | 0.05 | 0 | 0.3 | 0.4 |
| | $Li_2O$ | | 0.0 | 0.0 | 0.0 | 0.0 | 0.0 | 0 | 0 | 0 | 0 | 0 |
| | $Na_2O$ | | 8.5 | 8.5 | 0.0 | 4.25 | 6.0 | 0 | 0 | 0 | 0 | 0 |
| | $K_2O$ | | 0.0 | 0.0 | 8.5 | 4.25 | 1.5 | 8.4 | 8.6 | 8.5 | 8.5 | 8.4 |
| | $MgO$ | | 0.0 | 0.2 | 0.0 | 0.0 | 0.0 | 0 | 0 | 0 | 0 | 0 |
| | $CaO$ | | 0.7 | 0.5 | 0.7 | 0.7 | 0.8 | 0.7 | 0.7 | 0.7 | 0.7 | 0.7 |
| | $SrO$ | | 0.0 | 0.0 | 0.0 | 0.0 | 0.0 | 0 | 0 | 0 | 0 | 0 |
| | $BaO$ | | 0.3 | 0.3 | 0.0 | 0.0 | 0.5 | 0 | 0 | 0 | 0 | 0 |
| | $TiO_2$ | | 6.4 | 4.4 | 6.4 | 6.4 | 0.0 | 8.3 | 10.6 | 11.3 | 14.3 | 9.3 |
| | $ZrO_2$ | | 3.6 | 3.6 | 3.6 | 3.6 | 0.0 | 1.6 | 3.6 | 1.6 | 1.6 | 3.5 |
| | $Fe_2O_3$ | | 0.009 | 0.010 | 0.030 | 0.020 | 0.010 | 0.100 | 0.060 | 0.080 | 0.002 | 0.085 |
| | $SnO_2$ | | 0.2 | 0.2 | 0.2 | 0.2 | 0.0 | 0.2 | 0.2 | 0.2 | 0.2 | 0.2 |
| | $SO_3$ | | 0.000 | 0.000 | 0.000 | 0.000 | 0.000 | 0.000 | 0.000 | 0.000 | 0.000 | 0.000 |
| | $ZnO$ | | 0.0 | 0.0 | 0.0 | 0.0 | 0.0 | 0.0 | 0.0 | 0.0 | 0.0 | 0.0 |
| | $HfO_2$ | | Not measured | Not measured | Not measured | Not measured | Not measured | Not measured | Not measured | Not measured | Not measured | Not measured |
| | $P_2O_5$ | | Not measured | Not measured | Not measured | Not measured | Not measured | Not measured | Not measured | Not measured | Not measured | Not measured |
| | $Y_2O_3$ | | Not measured | Not measured | Not measured | Not measured | Not measured | Not measured | Not measured | Not measured | Not measured | Not measured |

|  |  | Unit | No. 11 | No. 12 | No. 13 | No. 14 | No. 15 | No. 16 | No. 17 | No. 18 | No. 19 | No. 20 |
|---|---|---|---|---|---|---|---|---|---|---|---|---|
| Glass composition | F | mol% | 0.00 | 0.00 | 0.00 | 0.00 | 0.00 | 0.00 | 0.00 | 0.00 | 0.00 | 0.00 |
|  | Cl |  | 0.00 | 0.00 | 0.00 | 0.00 | 0.00 | 0.00 | 0.00 | 0.00 | 0.00 | 0.00 |
|  | $Li_2O+Na_2O+K_2O$ |  | 8.5 | 8.5 | 8.5 | 8.5 | 7.5 | 8.4 | 8.6 | 8.5 | 8.5 | 8.4 |
|  | $MgO+CaO+SrO+BaO$ |  | 1.0 | 1.0 | 0.7 | 0.7 | 1.3 | 0.7 | 0.7 | 0.7 | 0.7 | 0.7 |
|  | $K_2O/ZrO_2$ | - | 0.0 | 0.0 | 2.4 | 1.2 | - | 5.3 | 2.4 | 5.3 | 5.3 | 2.4 |
|  | $TiO_2/(Li_2O+Na_2O+K_2O+MgP+CaO+SrO+BaO)$ | - | 0.7 | 0.5 | 0.7 | 0.7 | 0.0 | 0.9 | 1.1 | 1.2 | 1.6 | 1.0 |
|  | $(Li_2O+Na_2O+K_2O+MgO+CaO+SrO+BaO)/SiO_2$ | - | 0.12 | 0.12 | 0.11 | 0.11 | 0.11 | 0.11 | 0.12 | 0.12 | 0.12 | 0.12 |
| Hydrolytic resistance (Hydrochloric acid consumption H) | ISO 720 (1985) | mL/g | 0.121 | 0.127 | 0.077 | 0.071 | 0.030 | 0.088 | 0.054 | 0.074 | 0.061 | 0.054 |
|  | Class | - | HGA2 | HGA2 | HGA1 | HGA1 | HGA1 | HGA1 | HGA1 | HGA1 | HGA1 | HGA1 |
| Acid resistance (Elution evaluation QC, QO) | QC: Σ eluted components (cation mass) | mg/dm$^{2.}$ | Not measured | Not measured | Not measured | Not measured | Not measured | Not measured | Not measured | Not measured | Not measured | Not measured |
|  | QO: Σ eluted components (oxide mass) | mg/dm$^{2.}$ | Not measured | Not measured | Not measured | Not measured | Not measured | Not measured | Not measured | Not measured | Not measured | Not measured |
| Alkali resistance (loss in mass ρ) | ISO 695 (199605-15) | mg/dm$^2$ | 20 | 18 | 26 | 22 | 145 | 47 | 32 | 48 | 55 | 28 |
|  | Class | - | A1 | A1 | A1 | A1 | A2 | A1 | A1 | A1 | A1 | A1 |

(continued)

| | | Unit | No. 11 | No. 12 | No. 13 | No. 14 | No. 15 | No. 16 | No. 17 | No. 18 | No. 19 | No. 20 |
|---|---|---|---|---|---|---|---|---|---|---|---|---|
| Chemical resistance factor value | $H \times 10 + QC \times 10 + \rho$ | - | Not measured | Not measured | Not measured | Not measured | Not measured | Not measured | Not measured | Not measured | Not measured | Not measured |
| Liquidus temperature | | °C | 1340 | 1367 | 1140 | 1236 | 940 | 1197 | 1070 | 1143 | 1105 | 1090 |
| Thermal expansion coefficient | 20 to 300°C | $10^{-7}$/°C | 50.4 | 49.2 | 50.3 | 52.7 | Not measured | Not measured | Not measured | Not measured | Not measured | Not measured |
| | 30 to 300°C | | 50.6 | 49.4 | 50.4 | 52.9 | Not measured | Not measured | Not measured | Not measured | Not measured | Not measured |
| | 30 to 380°C | | 50.9 | 49.6 | 50.5 | 53.3 | 50.0 | Not measured | Not measured | Not measured | Not measured | Not measured |
| Viscosity characteristics | $10^{2.5}$ dPa·s | °C | 1577 | 1605 | 1652 | 1605 | Not measured | 1606 | 1586 | 1561 | 1518 | 1611 |
| | $10^{3.0}$ dPa·s | | 1448 | 1474 | 1524 | 1474 | 1420 | 1468 | 1462 | 1431 | 1390 | 1484 |
| | $10^{4.0}$ dPa.s | | 1249 | 1271 | 1328 | 1273 | 1165 | 1264 | 1272 | 1233 | 1198 | 1292 |
| | Strain point | | 877 | 890 | 957 | 889 | 785 | 903 | 918 | 879 | 853 | 933 |
| | Annealing point | | 660 | 662 | 718 | 660 | 570 | 685 | 691 | 668 | 652 | 700 |
| | Softening point | | 616 | 614 | 664 | 612 | 525 | 636 | 641 | 621 | 609 | 647 |
| Average transmittance (thickness: 1 mm) | 400 to 800 nm | % | Not measured | Not measured | Not measured | Not measured | 92 | Not measured | Not measured | Not measured | Not measured | Not measured |

Table 3

| | | Unit | No. 21 | No. 22 | No. 23 | No. 24 | No. 25 | No. 26 | No. 27 | No. 28 | No. 29 | No. 30 |
|---|---|---|---|---|---|---|---|---|---|---|---|---|
| Glass composition | $SiO_2$ | mol% | 80.79 | 74.93 | 81.27 | 76.62 | 84.79 | 86.53 | 81.11 | 77.62 | 84.88 | 69.94 |
| | $B_2O_3$ | | 0.2 | 0.00 | 0.00 | 0.00 | 0.00 | 0.00 | 0.00 | 0.00 | 0.00 | 0.00 |
| | $Al_2O_3$ | | 0 | 0.1 | 0.1 | 0.1 | 0.1 | 0.1 | 0.1 | 0.1 | 0.0 | 0.1 |
| | $Li_2O$ | | 0 | 0.0 | 0.0 | 0.0 | 0.0 | 0.0 | 0.0 | 0.0 | 0.0 | 0.0 |
| | $Na_2O$ | | 0 | 0.0 | 0.0 | 0.0 | 0.0 | 0.0 | 0.0 | 0.0 | 0.0 | 0.0 |
| | $K_2O$ | | 8.3 | 8.3 | 8.1 | 8.3 | 8.0 | 8.7 | 8.1 | 8.1 | 8.1 | 8.2 |
| | $MgO$ | | 0 | 0.0 | 0.0 | 0.0 | 0.0 | 0.0 | 0.0 | 0.0 | 0.0 | 0.0 |
| | $CaO$ | | 0.7 | 0.7 | 0.7 | 0.7 | 0.7 | 0.8 | 0.7 | 0.7 | 0.7 | 0.7 |
| | $SrO$ | | 0 | 0.0 | 0.0 | 0.0 | 0.0 | 0.0 | 0.0 | 0.0 | 0.0 | 0.0 |
| | $BaO$ | | 0 | 0.0 | 0.0 | 0.0 | 0.0 | 0.0 | 0.0 | 0.0 | 0.0 | 0.0 |
| | $TiO_2$ | | 6.3 | 12.2 | 6.1 | 10.4 | 2.6 | 0.1 | 2.6 | 6.1 | 6.0 | 17.2 |
| | $ZrO_2$ | | 3.500 | 3.549 | 3.498 | 3.561 | 3.493 | 3.598 | 6.970 | 6.988 | 0.010 | 3.578 |
| | $Fe_2O_3$ | | 0.010 | 0.004 | 0.004 | 0.004 | 0.005 | 0.005 | 0.006 | 0.006 | 0.002 | 0.004 |
| | $SnO_2$ | | 0.2 | 0.2 | 0.2 | 0.2 | 0.2 | 0.2 | 0.2 | 0.2 | 0.2 | 0.2 |
| | $SO_3$ | | 0.000 | 0.003 | 0.002 | 0.002 | 0.002 | 0.002 | 0.006 | 0.006 | 0.000 | 0.003 |
| | $ZnO$ | | 0.0 | 0.0 | 0.0 | 0.0 | 0.0 | 0.0 | 0.0 | 0.0 | 0.0 | 0.0 |
| | $HfO_2$ | | Not measured | 0.04 | 0.04 | 0.04 | 0.04 | 0.04 | 0.08 | 0.09 | 0.00 | 0.04 |
| | $P_2O_5$ | | Not measured | 0.03 | 0.02 | 0.02 | 0.01 | 0.01 | 0.02 | 0.02 | 0.01 | 0.03 |
| | $Y_2O_3$ | | Not measured | 0.00 | 0.00 | 0.00 | 0.00 | 0.00 | 0.01 | 0.01 | 0.00 | 0.00 |

| | | Unit | No. 21 | No. 22 | No. 23 | No. 24 | No. 25 | No. 26 | No. 27 | No. 28 | No. 29 | No. 30 |
|---|---|---|---|---|---|---|---|---|---|---|---|---|
| Glass composition | F | mol% | 0.00 | 0.00 | 0.00 | 0.00 | 0.00 | 0.00 | 0.00 | 0.00 | 0.00 | 0.00 |
| | Cl | | 0.00 | 0.00 | 0.00 | 0.00 | 0.00 | 0.00 | 0.00 | 0.00 | 0.00 | 0.00 |
| | $Li_2O+Na_2O+K_2O$ | | 8.3 | 8.3 | 8.1 | 8.4 | 8.1 | 8.7 | 8.1 | 8.2 | 8.2 | 8.2 |
| | $MgO+CaO+SrO+BaO$ | | 0.7 | 0.7 | 0.7 | 0.7 | 0.7 | 0.8 | 0.7 | 0.7 | 0.7 | 0.7 |
| | $K_2O/ZrO_2$ | - | 2.4 | 2.3 | 2.3 | 2.3 | 2.3 | 2.4 | 1.2 | 1.2 | 778.4 | 2.3 |
| | $TiO_2/(Li_2O+Na_2O+K_2O+MgO+CaO+SrO+BaO)$ | - | 0.7 | 1.3 | 0.7 | 1.1 | 0.3 | 0.0 | 0.3 | 0.7 | 0.7 | 1.9 |
| | $(Li_2O+Na_2O+K_2O+MgO+CaO+SrO+BaO)/SiO_2$ | - | 0.11 | 0.12 | 0.11 | 0.12 | 0.10 | 0.11 | 0.11 | 0.11 | 0.10 | 0.13 |
| Hydrolytic resistance (Hydrochloric acid consumption H) | ISO 720 (1985) | mL/g | 0.064 | 0.047 | 0.062 | 0.051 | 0.078 | 0.161 | 0.047 | 0.044 | 0.200 | 0.039 |
| | Class | - | HGA1 | HGA1 | HGA1 | HGA1 | HGA1 | HGA2 | HGA1 | HGA1 | HGA2 | HGA1 |
| Acid resistance (Elution evaluation QC, QO) | QC: Σ eluted components (cation mass) | $mg/dm^2$ | Not measured | Not measured | Not measured | Not measured | Not measured | Not measured | Not measured | Not measured | Not measured | Not measured |
| | QO: Σ eluted components (oxide weight) | $mg/dm^2$ | Not measured | Not measured | Not measured | Not measured | Not measured | Not measured | Not measured | Not measured | Not measured | Not measured |
| Alkali resistance (loss in mass p) | ISO 695 (199605-15) | $mg/dm^2$ | 26 | 33 | 28 | 30 | 25 | 23 | 17 | 19 | 80 | 32 |
| | Class | - | A1 | A1 | A1 | A1 | A1 | A1 | A1 | A1 | A2 | A1 |

(continued)

| | | Unit | No. 21 | No. 22 | No. 23 | No. 24 | No. 25 | No. 26 | No. 27 | No. 28 | No. 29 | No. 30 |
|---|---|---|---|---|---|---|---|---|---|---|---|---|
| Chemical resistance factor value | $H \times 10 + QC \times 10 + \rho$ | | Not measured | Not measured | Not measured | Not measured | Not measured | Not measured | Not measured | Not measured | Not measured | Not measured |
| Liquidus temperature | | °C | 1146 | 1121 | 1146 | 1255 | 1234 | 1359 | 1189 | 1077 | 1329 | > 1212.8 |
| Thermal expansion coefficient | 20 to 300°C | $10^{-7}$/°C | Not measured | Not measured | Not measured | Not measured | Not measured | Not measured | Not measured | Not measured | Not measured | Not measured |
| | 30 to 300°C | | Not measured | Not measured | Not measured | Not measured | Not measured | Not measured | Not measured | Not measured | Not measured | Not measured |
| | 30 to 380°C | | Not measured | Not measured | Not measured | Not measured | Not measured | Not measured | Not measured | Not measured | Not measured | Not measured |
| Viscosity characteristics | $10^{2.5}$ dPa·s | °C | 1660 | Not measured | 1664 | 1594 | 1714 | Not measured | Not measured | Not measured | 1601 | 1476 |
| | $10^{3.0}$ dPa·s | | 1530 | Not measured | 1531 | 1470 | 1577 | Not measured | Not measured | Not measured | 1456 | 1359 |
| | $10^{4.0}$ dPa·s | | 1332 | Not measured | 1332 | 1279 | 1370 | Not measured | Not measured | Not measured | 1237 | 1181 |
| | Strain point | | 960 | Not measured | Not measured | Not measured | Not measured | Not measured | Not measured | Not measured | Not measured | Not measured |
| | Annealing point | | 719 | Not measured | Not measured | Not measured | Not measured | Not measured | Not measured | Not measured | Not measured | Not measured |
| | Softening point | | 665 | Not measured | Not measured | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured | Not measured | Not measured | Not measured |

Table 4

| | | Unit | No. 31 | No. 32 | No. 33 | No. 34 | No. 35 | No. 36 | No. 37 | No. 38 | No. 39 | No. 40 |
|---|---|---|---|---|---|---|---|---|---|---|---|---|
| Glass composition | $SiO_2$ | mol% | 71.78 | 73.45 | 73.50 | 73.46 | 75.20 | 77.02 | 83.26 | 73.78 | 74.79 | 75.77 |
| | $B_2O_3$ | | 0.00 | 0.00 | 0.00 | 0.00 | 0.00 | 0.00 | 0.00 | 0.00 | 0.00 | 0.00 |
| | $Al_2O_3$ | | 0.1 | 0.1 | 0.0 | 0.1 | 0.1 | 0.1 | 0.1 | 0.1 | 0.1 | 0.1 |
| | $Li_2O$ | | 0.0 | 0.0 | 0.0 | 0.0 | 0.0 | 0.0 | 0.0 | 0.0 | 0.0 | 0.0 |
| | $Na_2O$ | | 0.0 | 0.0 | 0.0 | 0.0 | 0.0 | 0.0 | 0.0 | 0.0 | 0.0 | 0.0 |
| | $K_2O$ | | 8.1 | 8.2 | 8.2 | 8.1 | 8.2 | 8.1 | 8.1 | 9.4 | 9.4 | 9.4 |
| | $MgO$ | | 0.0 | 0.0 | 0.0 | 0.0 | 0.0 | 0.0 | 0.0 | 0.0 | 0.0 | 0.0 |
| | $CaO$ | | 0.7 | 0.7 | 0.7 | 0.7 | 0.7 | 0.7 | 0.7 | 0.7 | 0.7 | 0.7 |
| | $SrO$ | | 0.0 | 0.0 | 0.0 | 0.0 | 0.0 | 0.0 | 0.0 | 0.0 | 0.0 | 0.0 |
| | $BaO$ | | 0.0 | 0.0 | 0.0 | 0.0 | 0.0 | 0.0 | 0.0 | 0.0 | 0.0 | 0.0 |
| | $TiO_2$ | | 15.4 | 13.7 | 15.4 | 12.0 | 10.2 | 8.4 | 3.9 | 10.4 | 9.5 | 8.5 |
| | $ZrO_2$ | | 3.578 | 3.571 | 1.860 | 5.303 | 5.308 | 5.304 | 3.582 | 5.248 | 5.242 | 5.236 |
| | $Fe_2O_3$ | | 0.004 | 0.004 | 0.003 | 0.006 | 0.006 | 0.006 | 0.005 | 0.006 | 0.006 | 0.006 |
| | $SnO_2$ | | 0.2 | 0.2 | 0.2 | 0.2 | 0.2 | 0.2 | 0.2 | 0.2 | 0.2 | 0.2 |
| | $SO_3$ | | 0.003 | 0.003 | 0.000 | 0.004 | 0.004 | 0.003 | 0.002 | 0.004 | 0.004 | 0.004 |
| | $ZnO$ | | 0.0 | 0.0 | 0.0 | 0.0 | 0.0 | 0.0 | 0.0 | 0.0 | 0.0 | 0.0 |
| | $HfD_2$ | | 0.04 | 0.04 | 0.02 | 0.06 | 0.06 | 0.06 | 0.04 | 0.06 | 0.06 | 0.06 |
| | $P_2O_5$ | | 0.03 | 0.03 | 0.03 | 0.03 | 0.03 | 0.02 | 0.01 | 0.02 | 0.02 | 0.02 |
| | $Y_2O_3$ | | 0.00 | 0.00 | 0.00 | 0.01 | 0.01 | 0.01 | 0.00 | 0.01 | 0.01 | 0.01 |

(continued)

| | | Unit | No. 31 | No. 32 | No. 33 | No. 34 | No. 35 | No. 36 | No. 37 | No. 38 | No. 39 | No. 40 |
|---|---|---|---|---|---|---|---|---|---|---|---|---|
| Glass composition | F | mol% | 0.00 | 0.00 | 0.00 | 0.00 | 0.00 | 0.00 | 0.00 | 0.00 | 0.00 | 0.00 |
| | Cl | | 0.00 | 0.00 | 0.00 | 0.00 | 0.00 | 0.00 | 0.00 | 0.00 | 0.00 | 0.00 |
| | $Li_2O+Na_2O+K_2O$ | | 8.2 | 8.2 | 8.2 | 8.1 | 8.2 | 8.1 | 8.2 | 9.5 | 9.4 | 9.4 |
| | $MgO+CaO+SrO+BaO$ | | 0.7 | 0.7 | 0.7 | 0.7 | 0.7 | 0.7 | 0.7 | 0.7 | 0.7 | 0.7 |
| | $K_2O/ZrO_2$ | - | 2.3 | 2.3 | 4.4 | 1.5 | 1.5 | 1.5 | 2.3 | 1.8 | 1.8 | 1.8 |
| | $TiO_2/(Li_2O+Na_2O+K_2O+MgP+CaO+SrO+BaO)$ | - | 1.7 | 1.5 | 1.7 | 1.4 | 1.1 | 1.0 | 0.4 | 1.0 | 0.9 | 0.8 |
| | $(Li_2O+Na_2O+K_2O+MgO+CaO+SrO+BaO)/SiO_2$ | - | 0.12 | 0.12 | 0.12 | 0.12 | 0.12 | 0.12 | 0.11 | 0.14 | 0.14 | 0.13 |
| Hydrolytic resistance (Hydrochloric acid consumption H) | ISO 720 (1985) | mL/g | 0.041 | 0.045 | 0.052 | 0.038 | 0.042 | 0.044 | 0.074 | 0.056 | 0.062 | 0.065 |
| | Class | - | HGA1 | HGA1 | HGA1 | HGA1 | HGA1 | HGA1 | HGA1 | HGA1 | HGA1 | HGA1 |
| Acid resistance (Elution evaluation QC, QO) | QC: Σ eluted components (cation mass) | $mg/dm^2$ | Not measured | Not measured | Not measured | Not measured | Not measured | Not measured | Not measured | 1.2 | 1.4 | 1.1 |
| | QO: Σ eluted components (oxide mass) | $mg/dm^2$ | Not measured | Not measured | Not measured | Not measured | Not measured | Not measured | Not measured | 2.0 | 2.5 | 1.8 |
| Alkali resistance (loss in mass p) | ISO 695 (199605-15) | $mg/dm^2$ | 36 | 35 | 53 | 24 | 24 | 21 | 24 | 23 | 22 | 21 |
| | Class | - | A1 | A1 | A1 | A1 | A1 | A1 | A1 | A1 | A1 | A1 |

| | | Unit | No. 31 | No. 32 | No. 33 | No. 34 | No. 35 | No. 36 | No. 37 | No. 38 | No. 39 | No. 40 |
|---|---|---|---|---|---|---|---|---|---|---|---|---|
| Chemical resistance factor value | $H \times 10 + QC \times 10 + \rho$ | - | Not measured | Not measured | Not measured | Not measured | Not measured | Not measured | Not measured | 35 | 36 | 32 |
| Liquidus temperature | | °C | > 1149.0 | > 1181.2 | > 1183.7 | > 1155.5 | 1135 | 1127 | 1194 | 1068 | 1042 | 1149 |
| Thermal expansion coefficient | 20 to 300°C | $10^{-7}$/°C | Not measured | Not measured | Not measured | Not measured | Not measured | Not measured | Not measured | Not measured | Not measured | Not measured |
| | 30 to 300°C | | Not measured | Not measured | Not measured | Not measured | Not measured | Not measured | Not measured | Not measured | Not measured | Not measured |
| | 30 to 380°C | | Not measured | Not measured | Not measured | Not measured | Not measured | Not measured | Not measured | Not measured | Not measured | Not measured |
| Viscosity characteristics | $10^{2.5}$ dPa·s | °C | 1510 | 1544 | 1508 | 1572 | 1609 | 1641 | 1705 | 1560 | 1581 | 1597 |
| | $10^{3.0}$ dPa·s | | 1392 | 1421 | 1384 | 1454 | 1489 | 1518 | 1569 | 1446 | 1466 | 1481 |
| | $10^{4.0}$ dPa·s | | 1208 | 1235 | 1194 | 1272 | 1304 | 1331 | 1365 | 1270 | 1288 | 1302 |
| | Strain point | | Not measured | Not measured | Not measured | Not measured | Not measured | Not measured | Not measured | Not measured | Not measured | Not measured |
| | Annealing point | | Not measured | Not measured | Not measured | Not measured | Not measured | Not measured | Not measured | Not measured | Not measured | Not measured |
| | Softening point | | Not measured | Not measured | Not measured | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured | Not measured | Not measured | Not measured |

Table 5

| Glass composition | | Unit | No. 41 | No. 42 | No. 43 | No. 44 | No. 45 | No. 46 | No. 47 | No. 48 | No. 49 | No. 50 |
|---|---|---|---|---|---|---|---|---|---|---|---|---|
| Glass composition | $SiO_2$ | mol% | 73.74 | 74.90 | 73.75 | 72.65 | 72.96 | 74.75 | 73.63 | 74.41 | 73.71 | 75.99 |
| | $B_2O_3$ | | 0.00 | 0.00 | 0.00 | 0.00 | 0.00 | 0.00 | 0.00 | 0.00 | 0.00 | 0.00 |
| | $Al_2O_3$ | | 0.1 | 0.1 | 0.1 | 0.1 | 0.1 | 0.1 | 0.1 | 0.1 | 0.1 | 0.1 |
| | $Li_2O$ | | 0.0 | 0.0 | 0.0 | 0.0 | 0.0 | 0.0 | 0.0 | 0.0 | 0.0 | 0.0 |
| | $Na_2O$ | | 0.0 | 0.0 | 0.0 | 0.4 | 0.0 | 0.1 | 0.0 | 0.1 | 0.1 | 0.0 |
| | $K_2O$ | | 9.4 | 9.4 | 9.4 | 8.4 | 8.4 | 10.4 | 10.4 | 10.4 | 10.3 | 10.3 |
| | $MgO$ | | 0.0 | 0.0 | 0.0 | 0.0 | 0.0 | 0.0 | 0.0 | 0.0 | 0.0 | 0.0 |
| | $CaO$ | | 0.7 | 0.7 | 0.7 | 0.7 | 2.4 | 0.0 | 0.0 | 0.0 | 0.0 | 0.0 |
| | $SrO$ | | 0.0 | 0.0 | 0.0 | 0.0 | 0.0 | 0.0 | 0.0 | 0.0 | 0.0 | 0.0 |
| | $BaO$ | | 0.0 | 0.0 | 0.0 | 0.0 | 0.0 | 0.0 | 0.0 | 0.0 | 0.0 | 0.0 |
| | $TiO_2$ | | 9.5 | 8.5 | 8.5 | 10.5 | 10.5 | 9.2 | 10.0 | 9.4 | 10.0 | 9.1 |
| | $ZrO_2$ | | 6.199 | 6.115 | 7.135 | 5.253 | 5.228 | 5.215 | 5.534 | 5.336 | 5.547 | 4.216 |
| | $Fe_2O_3$ | | 0.006 | 0.006 | 0.066 | 0.006 | 0.006 | 0.006 | 0.006 | 0.006 | 0.007 | 0.006 |
| | $SnO_2$ | | 0.2 | 0.2 | 0.2 | 0.2 | 0.2 | 0.2 | 0.2 | 0.2 | 0.2 | 0.2 |
| | $SO_3$ | | 0.005 | 0.005 | 0.006 | 0.003 | 0.004 | 0.004 | 0.004 | 0.004 | 0.004 | 0.003 |
| | $ZnO$ | | 0.0 | 0.0 | 0.0 | 1.7 | 0.0 | 0.0 | 0.0 | 0.0 | 0.0 | 0.0 |
| | $HfO_2$ | | 0.07 | 0.07 | 0.08 | 0.05 | 0.06 | 0.06 | 0.07 | 0.06 | 0.07 | 0.05 |
| | $P_2O_5$ | | 0.03 | 0.02 | 0.02 | 0.03 | 0.03 | 0.02 | 0.02 | 0.02 | 0.02 | 0.02 |
| | $Y_2O_3$ | | 0.01 | 0.01 | 0.01 | 0.01 | 0.01 | 0.01 | 0.01 | 0.01 | 0.01 | 0.01 |

| | | Unit | No. 41 | No. 42 | No. 43 | No. 44 | No. 45 | No. 46 | No. 47 | No. 48 | No. 49 | No. 50 |
|---|---|---|---|---|---|---|---|---|---|---|---|---|
| Glass composition | F | mol% | 0.00 | 0.00 | 0.00 | 0.00 | 0.00 | 0.00 | 0.00 | 0.00 | 0.00 | 0.00 |
| | Cl | | 0.00 | 0.00 | 0.00 | 0.00 | 0.00 | 0.00 | 0.00 | 0.00 | 0.00 | 0.00 |
| | $Li_2O+Na_2O+K_2O$ | | 9.5 | 9.4 | 9.5 | 8.9 | 8.5 | 10.5 | 10.4 | 10.4 | 10.3 | 10.3 |
| | $MgO+CaO+SrO+BaO$ | | 0.7 | 0.7 | 0.7 | 0.7 | 2.5 | 0.0 | 0.0 | 0.0 | 0.0 | 0.0 |
| | $K_2O/ZrO_2$ | - | 1.5 | 1.5 | 1.3 | 1.6 | 1.6 | 2.0 | 1.9 | 1.9 | 1.8 | 2.4 |
| | $TiO_2/(Li_2O+Na_2O+K_2O+MgP+CaO+SrO+BaO)$ | - | 0.9 | 0.8 | 0.8 | 1.1 | 1.0 | 0.9 | 1.0 | 0.9 | 1.0 | 0.9 |
| | $(Li_2O+Na_2O+K_2O+MgO+CaO+SrO+BaO)/SiO_2$ | - | 0.14 | 0.14 | 0.14 | 0.13 | 0.15 | 0.14 | 0.14 | 0.14 | 0.14 | 0.14 |
| Hydrolytic resistance (Hydrochloric acid consumption H) | ISO 720 (1985) | mL/g | 0.057 | 0.057 | 0.054 | 0.047 | 0.047 | 0.083 | 0.080 | 0.084 | 0.080 | 0.097 |
| | Class | - | HGA1 | HGA1 | HGA1 | HGA1 | HGA1 | HGA1 | HGA1 | HGA1 | HGA1 | HGA1 |
| Acid resistance (Elution evaluation QC, QO) | QC: Σ eluted components (cation mass) | mg/dm$^2$ | 1.5 | 1.2 | 1.4 | Not measured | 1.5 | 1.4 | 1.4 | 1.3 | 1.4 | 1.1 |
| | QO: Σ eluted components (oxide mass) | mg/dm$^2$ | 2.6 | 2.1 | 2.4 | Not measured | 2.6 | 2.5 | 2.5 | 2.3 | 2.5 | 2.0 |
| Alkali resistance (loss in mass p) | ISO 695 (199605-15) | mg/dm$^2$ | 19 | 18 | 17 | 24 | 22 | 23 | 22 | 23 | 22 | 28 |
| | Class | - | A1 | A1 | A1 | A1 | A1 | A1 | A1 | A1 | A1 | A1 |

EP 4 227 274 A1

| | | Unit | No. 41 | No. 42 | No. 43 | No. 44 | No. 45 | No. 46 | No. 47 | No. 48 | No. 49 | No. 50 |
|---|---|---|---|---|---|---|---|---|---|---|---|---|
| Chemical resistance factor value | $H \times 10 + QC \times 10 + \rho$ | - | 34 | 30 | 32 | Not measured | 37 | 38 | 37 | 36 | 38 | 40 |
| Liquidus temperature | | °C | 1076 | 1173 | 1235 | 1150 | 1153 | 1088 | 1098 | 1078 | 1095 | 1067 |
| Thermal expansion coefficient | 20 to 300°C | $10^{-7}$/°C | Not measured | Not measured | Not measured | Not measured | Not measured | Not measured | Not measured | Not measured | Not measured | Not measured |
| | 30 to 300°C | | Not measured | Not measured | Not measured | Not measured | Not measured | Not measured | Not measured | Not measured | Not measured | Not measured |
| | 30 to 380°C | | Not measured | Not measured | Not measured | Not measured | Not measured | Not measured | Not measured | Not measured | Not measured | Not measured |
| Viscosity characteristics | $10^{2.5}$ dPa·s | °C | 1583 | Not measured | Not measured | 1564 | 1548 | 1574 | 1562 | 1572 | 1565 | 1573 |
| | $10^{3.0}$ dPa·s | | 1469 | Not measured | Not measured | 1448 | 1433 | 1460 | 1449 | 1459 | 1452 | 1454 |
| | $10^{4.0}$ dPa·s | | 1295 | Not measured | Not measured | 1269 | 1258 | 1284 | 1276 | 1284 | 1280 | 1272 |
| | Strain point | | Not measured | Not measured | Not measured | Not measured | Not measured | Not measured | Not measured | Not measured | Not measured | Not measured |
| | Annealing point | | Not measured | Not measured | Not measured | Not measured | Not measured | Not measured | Not measured | Not measured | Not measured | Not measured |
| | Softening point | | Not measured | Not measured | Not measured | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured | Not measured | Not measured | Not measured |

Table 6

| Glass composition | Unit | No. 51 | No. 52 | No. 53 | No. 54 | No. 55 | No. 56 | No. 57 | No. 58 | No. 59 | No. 60 |
|---|---|---|---|---|---|---|---|---|---|---|---|
| $SiO_2$ | mol% | 75.69 | 75.68 | 75.73 | 75.75 | 75.67 | 75.35 | 75.30 | 75.30 | 75.3 | 75.3 |
| $B_2O_3$ | | 0.00 | 0.00 | 0.00 | 0.00 | 0.00 | 0.00 | 0.00 | 0.00 | 0.00 | 0.00 |
| $Al_2O_3$ | | 0.1 | 0.1 | 0.1 | 0.1 | 0.1 | 0.1 | 0.0 | 0.0 | 0.0 | 0.0 |
| $Li_2O$ | | 0.0 | 0.0 | 0.0 | 0.0 | 0.0 | 0.0 | 0.0 | 0.0 | 0.0 | 0.0 |
| $Na_2O$ | | 0.0 | 0.0 | 0.0 | 0.0 | 0.0 | 0.0 | 0.0 | 0.0 | 0.0 | 0.0 |
| $K_2O$ | | 10.8 | 10.3 | 10.0 | 9.7 | 9.6 | 9.9 | 10.0 | 10.0 | 10.0 | 10.1 |
| MgO | | 0.0 | 0.0 | 0.0 | 0.0 | 0.0 | 0.0 | 0.0 | 0.0 | 0.0 | 0.0 |
| CaO | | 0.0 | 0.7 | 1.2 | 1.4 | 1.6 | 1.2 | 1.2 | 1.2 | 1.3 | 1.1 |
| SrO | | 0.0 | 0.0 | 0.0 | 0.0 | 0.0 | 0.0 | 0.0 | 0.0 | 0.0 | 0.0 |
| BaO | | 0.0 | 0.0 | 0.0 | 0.0 | 0.0 | 0.0 | 0.0 | 0.0 | 0.0 | 0.0 |
| $TiO_2$ | | 8.5 | 8.5 | 8.5 | 8.5 | 8.5 | 8.9 | 9.2 | 9.3 | 9.2 | 9.4 |
| $ZrO_2$ | | 4.632 | 4.449 | 4.239 | 4.251 | 4.252 | 4.249 | 4.100 | 4.000 | 4.000 | 3.900 |
| $Fe_2O_3$ | | 0.007 | 0.006 | 0.007 | 0.007 | 0.007 | 0.007 | Not measured | Not measured | Not measured | Not measured |
| $SnO_2$ | | 0.2 | 0.2 | 0.2 | 0.2 | 0.2 | 0.2 | 0.2 | 0.2 | 0.2 | 0.2 |
| $SO_3$ | | 0.004 | 0.004 | 0.004 | 0.003 | 0.003 | 0.003 | Not measured | Not measured | Not measured | Not measured |
| ZnO | | 0.0 | 0.0 | 0.0 | 0.0 | 0.0 | 0.0 | Not measured | Not measured | Not measured | Not measured |
| $HfO_2$ | | 0.06 | 0.05 | 0.05 | 0.05 | 0.05 | 0.05 | Not measured | Not measured | Not measured | Not measured |
| $P_2O_5$ | | 0.02 | 0.02 | 0.02 | 0.02 | 0.02 | 0.02 | Not measured | Not measured | Not measured | Not measured |
| $Y_2O_3$ | | 0.01 | 0.01 | 0.01 | 0.01 | 0.01 | 0.01 | Not measured | Not measured | Not measured | Not measured |

(continued)

| | | Unit | No. 51 | No. 52 | No. 53 | No. 54 | No. 55 | No. 56 | No. 57 | No. 58 | No. 59 | No. 60 |
|---|---|---|---|---|---|---|---|---|---|---|---|---|
| Glass composition | F | | 0.00 | 0.00 | 0.00 | 0.00 | 0.00 | 0.00 | 0.00 | 0.00 | 0.00 | 0.00 |
| | Cl | | 0.00 | 0.00 | 0.00 | 0.00 | 0.00 | 0.00 | 0.00 | 0.00 | 0.00 | 0.00 |
| | $Li_2O+Na_2O+K_2O$ | mol% | 10.8 | 10.3 | 10.0 | 9.8 | 9.6 | 10.0 | 10.0 | 10.0 | 10.0 | 10.1 |
| | $MgO+CaO+SrO+BaO$ | | 0.0 | 0.7 | 1.2 | 1.4 | 1.6 | 1.2 | 1.2 | 1.2 | 1.3 | 1.1 |
| | $K_2O/ZrO_2$ | - | 2.3 | 2.3 | 2.4 | 2.3 | 2.3 | 2.3 | 2.4 | 2.5 | 2.5 | 2.6 |
| | $TiO_2/(Li_2O+Na_2O+K_2O+MgP+CaO+SrO+BaO)$ | - | 0.8 | 0.8 | 0.8 | 0.8 | 0.8 | 0.8 | 0.8 | 0.8 | 0.8 | 0.8 |
| | $(Li_2O+Na_2O+K_2O+MgO+CaO+SrO+BaO)/SiO_2$ | - | 0.14 | 0.15 | 0.15 | 0.15 | 0.15 | 0.15 | 0.15 | 0.15 | 0.15 | 0.15 |
| Hydrolytic resistance (Hydrochloric acid consumption H) | ISO 720 (1985) | mL/g | 0.111 | 0.088 | 0.090 | 0.085 | 0.077 | 0.084 | (0.009) | (0.092) | (0.090) | (0.096) |
| | Class | - | HGA2 | HGA1 | HGA1 | HGA1 | HGA1 | HGA1 | Not measured | Not measured | Not measured | Not measured |
| Acid resistance (Elution evaluation QC, QO) | QC: Σ eluted components (cation mass) | mg/dm² | 1.4 | 1.2 | 1.2 | 1.1 | 1.1 | 1.2 | Not measured | Not measured | Not measured | Not measured |
| | QO: Σ eluted components (oxide mass) | mg/dm² | 2.4 | 2.2 | 2.2 | 1.9 | 1.9 | 2.1 | Not measured | Not measured | Not measured | Not measured |
| Alkali resistance (loss in mass p) | ISO 695 (199605-15) | mg/dm² | 25 | 26 | 25 | 25 | 25 | 25 | Not measured | Not measured | Not measured | Not measured |
| | Class | - | A1 | A1 | A1 | A1 | A1 | A1 | Not measured | Not measured | Not measured | Not measured |

25

| | | Unit | No. 51 | No. 52 | No. 53 | No. 54 | No. 55 | No. 56 | No. 57 | No. 58 | No. 59 | No. 60 |
|---|---|---|---|---|---|---|---|---|---|---|---|---|
| Chemical resistance factor value | H× 10+QC × 10+p | - | 40 | 39 | 38 | 37 | 36 | 38 | Not measured | Not measured | Not measured | Not measured |
| Liquidus temperature | | °C | 1078 | 1077 | 1090 | 1075 | 1093 | 1094 | Not measured | Not measured | Not measured | Not measured |
| Thermal expansion coefficient | 20 to 300°C | $10^{-7}$/°C | Not measured | Not measured | Not measured | Not measured | Not measured | Not measured | Not measured | Not measured | Not measured | Not measured |
| | 30 to 300°C | | Not measured | Not measured | Not measured | Not measured | Not measured | Not measured | Not measured | Not measured | Not measured | Not measured |
| | 30 to 380°C | | Not measured | Not measured | Not measured | Not measured | Not measured | Not measured | Not measured | Not measured | Not measured | Not measured |
| Viscosity characteristics | $10^{2.5}$ dPa·s | °C | 1572 | 1569 | 1561 | 1565 | 1570 | 1559 | Not measured | Not measured | Not measured | Not measured |
| | $10^{3.0}$ dPa·s | | 1456 | 1453 | 1443 | 1351 | 1452 | 1442 | Not measured | Not measured | Not measured | Not measured |
| | $10^{4.0}$ dPa·s | | 1278 | 1274 | 1263 | 1269 | 1272 | 1264 | (1243) | (1240) | (1239) | (1237) |
| | Strain point | | Not measured | Not measured | Not measured | Not measured | Not measured | Not measured | Not measured | Not measured | Not measured | Not measured |
| | Annealing point | | Not measured | Not measured | Not measured | Not measured | Not measured | Not measured | Not measured | Not measured | Not measured | Not measured |
| | Softening point | | Not measured | Not measured | Not measured | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured | Not measured | Not measured | Not measured |

Table 7

| | | Unit | No. 61 | No. 62 | No. 63 | No. 64 | No. 65 | No. 66 | No. 67 | No. 68 | No. 69 | No. 70 |
|---|---|---|---|---|---|---|---|---|---|---|---|---|
| Glass composition | $SiO_2$ | mol% | 75.1 | 75.3 | 80.6 | 80.6 | 75.3 | 75.3 | 79.6 | 78.6 | 78.6 | 78.4 |
| | $B_2O_3$ | | 0.0 | 0.0 | 0.0 | 0.0 | 0.0 | 0.0 | 0.0 | 0.0 | 0.0 | 0.0 |
| | $Al_2O_3$ | | 0.0 | 0.0 | 0.0 | 0.0 | 0.0 | 0.0 | 0.1 | 0.1 | 0.1 | 0.1 |
| | $Li_2O$ | | 0.0 | 0.0 | 0.0 | 0.0 | 3.0 | 5.0 | 0.0 | 0.0 | 0.0 | 0.0 |
| | $Na_2O$ | | 0.0 | 0.2 | 2.0 | 1.0 | 0.0 | 0.0 | 0.0 | 0.0 | 0.0 | 0.5 |
| | $K_2O$ | | 9.9 | 9.8 | 6.5 | 7.5 | 7.0 | 5.0 | 9.9 | 10.3 | 9.3 | 8.8 |
| | $MgO$ | | 0.0 | 0.0 | 0.0 | 0.0 | 0.0 | 0.0 | 0.0 | 0.0 | 0.0 | 0.0 |
| | $CaO$ | | 1.6 | 1.2 | 0.7 | 0.7 | 1.2 | 1.2 | 1.2 | 1.3 | 1.3 | 1.3 |
| | $SrO$ | | 0.0 | 0.0 | 0.0 | 0.0 | 0.0 | 0.0 | 0.0 | 0.0 | 0.0 | 0.0 |
| | $BaO$ | | 0.0 | 0.0 | 0.0 | 0.0 | 0.0 | 0.0 | 0.0 | 0.0 | 0.0 | 0.0 |
| | $TiO_2$ | | 9.2 | 9.0 | 6.4 | 6.4 | 9.2 | 9.2 | 8.9 | 9.3 | 10.3 | 10.3 |
| | $ZrO_2$ | | 4.000 | 4.300 | 3.600 | 3.600 | 4.100 | 4.100 | 0.005 | 0.005 | 0.005 | 0.005 |
| | $Fe_2O_3$ | | Not measured | Not measured | Not measured | Not measured | Not measured | Not measured | Not measured | Not measured | Not measured | Not measured |
| | $SnO_2$ | | 0.2 | 0.2 | 0.2 | 0.2 | 0.2 | 0.2 | 0.1 | 0.1 | 0.1 | 0.3 |
| | $SO_3$ | | Not measured | Not measured | Not measured | Not measured | Not measured | Not measured | Not measured | Not measured | Not measured | Not measured |
| | $ZnO$ | | Not measured | Not measured | Not measured | Not measured | Not measured | Not measured | Not measured | Not measured | Not measured | Not measured |
| | $HfO_2$ | | Not measured | Not measured | Not measured | Not measured | Not measured | Not measured | Not measured | Not measured | Not measured | Not measured |
| | $P_2O_5$ | | Not measured | Not measured | Not measured | Not measured | Not measured | Not measured | Not measured | Not measured | Not measured | Not measured |
| | $Y_2O_3$ | | Not measured | Not measured | Not measured | Not measured | Not measured | Not measured | Not measured | Not measured | Not measured | Not measured |

(continued)

| | Unit | No. 61 | No. 62 | No. 63 | No. 64 | No. 65 | No. 66 | No. 67 | No. 68 | No. 69 | No. 70 |
|---|---|---|---|---|---|---|---|---|---|---|---|
| Glass composition | F | | 0.0 | 0.0 | 0.0 | 0.0 | 0.0 | 0.0 | 0.2 | 0.1 | 0.2 | 0.1 |
| | Cl | | 0.00 | 0.00 | 0.00 | 0.00 | 0.00 | 0.00 | 0.05 | 0.15 | 0.05 | 0.15 |
| | $Li_2O+Na_2O+K_2O$ | mol% | 9.9 | 10.0 | 8.5 | 8.5 | 10.0 | 10.0 | 9.9 | 10.3 | 9.3 | 9.3 |
| | $MgO+CaO+SrO+BaO$ | - | 1.6 | 1.2 | 0.7 | 0.7 | 1.2 | 1.2 | 1.2 | 1.3 | 1.3 | 1.3 |
| | $K_2O/ZrO_2$ | - | 2.5 | 2.3 | 1.8 | 2.1 | 1.7 | 1.2 | 1980 | 2060 | 1860 | 1760 |
| | $TiO_2/(Li_2O+Na_2O+K_2O+MgO+CaO+SrO+BaO)$ | - | 0.8 | 0.8 | 0.7 | 0.7 | 0.8 | 0.8 | 0.8 | 0.8 | 1.0 | 1.0 |
| | $(Li_2O+Na_2O+K_2O+MgO+CaO+SrO+BaO)/SiO_2$ | - | 0.15 | 0.15 | 0.11 | 0.11 | 0.15 | 0.15 | 0.14 | 0.15 | 0.13 | 0.14 |
| Hydrolytic resistance (Hydrochloric acid consumption H) | ISO 720 (1985) | mL/g | (0.091) | Not measured | Not measured | Not measured | Not measured | Not measured | Not measured | Not measured | Not measured | Not measured |
| | Class | - | Not measured | Not measured | Not measured | Not measured | Not measured | Not measured | Not measured | Not measured | Not measured | Not measured |
| Acid resistance (Elution evaluation QC, QO) | QC: Σ eluted components (cation mass) | mg/dm² | Not measured | Not measured | Not measured | Not measured | Not measured | Not measured | Not measured | Not measured | Not measured | Not measured |
| | QO: Σ eluted components (oxide mass) | mg/dm² | Not measured | Not measured | Not measured | Not measured | Not measured | Not measured | Not measured | Not measured | Not measured | Not measured |
| Alkali resistance | ISO 695 (199605-15) | mg/dm² | Not measured | Not measured | Not measured | Not measured | Not measured | Not measured | Not measured | Not measured | Not measured | Not measured |
| (loss in mass p) | Class | - | Not measured | Not measured | Not measured | Not measured | Not measured | Not measured | Not measured | Not measured | Not measured | Not measured |

| | Unit | No. 61 | No. 62 | No. 63 | No. 64 | No. 65 | No. 66 | No. 67 | No. 68 | No. 69 | No. 70 |
|---|---|---|---|---|---|---|---|---|---|---|---|
| Chemical resistance factor value | H × 10 + QC × 10 + ρ | Not measured | Not measured | Not measured | Not measured | Not measured | Not measured | Not measured | Not measured | Not measured | Not measured |
| Liquidus temperature | °C | Not measured | Not measured | Not measured | Not measured | Not measured | Not measured | Not measured | Not measured | Not measured | Not measured |
| Thermal expansion coefficient — 20 to 300°C | $10^{-7}/°C$ | Not measured | Not measured | Not measured | Not measured | Not measured | Not measured | Not measured | Not measured | Not measured | Not measured |
| Thermal expansion coefficient — 30 to 300°C | $10^{-7}/°C$ | Not measured | Not measured | Not measured | Not measured | Not measured | Not measured | Not measured | Not measured | Not measured | Not measured |
| Thermal expansion coefficient — 30 to 380°C | $10^{-7}/°C$ | Not measured | Not measured | Not measured | Not measured | Not measured | Not measured | Not measured | Not measured | Not measured | Not measured |
| Viscosity characteristics — $10^{2.5}$ dPa·s | °C | Not measured | Not measured | Not measured | Not measured | Not measured | Not measured | Not measured | Not measured | Not measured | Not measured |
| Viscosity characteristics — $10^{3.0}$ dPa·s | °C | Not measured | Not measured | Not measured | Not measured | Not measured | Not measured | Not measured | Not measured | Not measured | Not measured |
| Viscosity characteristics — $10^{4.0}$ dPa·s | °C | (1236) | Not measured | Not measured | Not measured | Not measured | Not measured | Not measured | Not measured | Not measured | Not measured |
| Viscosity characteristics — Strain point | °C | Not measured | Not measured | Not measured | Not measured | Not measured | Not measured | Not measured | Not measured | Not measured | Not measured |
| Viscosity characteristics — Annealing point | °C | Not measured | Not measured | Not measured | Not measured | Not measured | Not measured | Not measured | Not measured | Not measured | Not measured |
| Viscosity characteristics — Softening point | °C | Not measured | Not measured | Not measured | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured | Not measured | Not measured | Not measured |

Table 8

| Glass composition | | Unit | No. 71 | No. 72 | No. 73 | No. 74 | No. 75 | No. 76 | No. 77 | No. 78 | No. 79 | No. 80 |
|---|---|---|---|---|---|---|---|---|---|---|---|---|
| | $SiO_2$ | mol% | 78.6 | 79.0 | 78.2 | 78.0 | 77.5 | 79.0 | 78.4 | 79.0 | 78.5 | 78.5 |
| | $B_2O_3$ | | 0.0 | 0.0 | 0.0 | 0.0 | 0.0 | 0.0 | 0.0 | 0.0 | 0.0 | 0.0 |
| | $Al_2O_3$ | | 0.1 | 0.1 | 0.1 | 0.1 | 0.1 | 0.1 | 0.1 | 0.1 | 0.1 | 0.1 |
| | $Li_2O$ | | 0.0 | 0.0 | 0.0 | 0.0 | 0.0 | 0.0 | 0.0 | 0.0 | 0.0 | 0.0 |
| | $Na_2O$ | | 1.0 | 0.0 | 0.0 | 0.0 | 0.0 | 0.0 | 0.0 | 0.0 | 0.0 | 0.0 |
| | $K_2O$ | | 8.3 | 9.9 | 9.9 | 9.9 | 9.9 | 10.4 | 10.9 | 9.9 | 9.9 | 10.4 |
| | $MgO$ | | 0.0 | 0.0 | 0.0 | 0.0 | 0.0 | 0.0 | 0.0 | 0.0 | 0.0 | 0.0 |
| | $CaO$ | | 1.3 | 1.2 | 1.2 | 1.2 | 1.2 | 1.2 | 1.2 | 1.7 | 2.2 | 1.7 |
| | $SrO$ | | 0.0 | 0.0 | 0.0 | 0.0 | 0.0 | 0.0 | 0.0 | 0.0 | 0.0 | 0.0 |
| | $BaO$ | | 0.0 | 0.0 | 0.0 | 0.0 | 0.0 | 0.0 | 0.0 | 0.0 | 0.0 | 0.0 |
| | $TiO_2$ | | 10.3 | 9.4 | 9.9 | 10.4 | 10.9 | 8.9 | 8.9 | 8.9 | 8.9 | 8.9 |
| | $ZrO_2$ | | 0.005 | 0.005 | 0.005 | 0.005 | 0.005 | 0.005 | 0.005 | 0.005 | 0.005 | 0.005 |
| | $Fe_2O_3$ | | Not measured | Not measured | Not measured | Not measured | Not measured | Not measured | Not measured | Not measured | Not measured | Not measured |
| | $SnO_2$ | | 0.1 | 0.1 | 0.4 | 0.1 | 0.1 | 0.1 | 0.2 | 0.1 | 0.1 | 0.1 |
| | $SO_3$ | | Not measured | Not measured | Not measured | Not measured | Not measured | Not measured | Not measured | Not measured | Not measured | Not measured |
| | $ZnO$ | | Not measured | Not measured | Not measured | Not measured | Not measured | Not measured | Not measured | Not measured | Not measured | Not measured |
| | $HfO_2$ | | Not measured | Not measured | Not measured | Not measured | Not measured | Not measured | Not measured | Not measured | Not measured | Not measured |
| | $P_2O_5$ | | Not measured | Not measured | Not measured | Not measured | Not measured | Not measured | Not measured | Not measured | Not measured | Not measured |
| | $Y_2O_3$ | | Not measured | Not measured | Not measured | Not measured | Not measured | Not measured | Not measured | Not measured | Not measured | Not measured |

| | | Unit | No. 71 | No. 72 | No. 73 | No. 74 | No. 75 | No. 76 | No. 77 | No. 78 | No. 79 | No. 80 |
|---|---|---|---|---|---|---|---|---|---|---|---|---|
| Glass composition | F | mol% | 0.2 | 0.1 | 0.2 | 0.1 | 0.2 | 0.1 | 0.2 | 0.1 | 0.2 | 0.1 |
| | Cl | | 0.05 | 0.15 | 0.05 | 0.15 | 0.05 | 0.15 | 0.05 | 0.15 | 0.05 | 0.15 |
| | $Li_2O+Na_2O+K_2O$ | | 9.3 | 9.9 | 9.9 | 9.9 | 9.9 | 10.4 | 10.9 | 9.9 | 9.9 | 10.4 |
| | $MgO+CaO+SrO+BaO$ | | 1.3 | 1.2 | 1.2 | 1.2 | 1.2 | 1.2 | 1.2 | 1.7 | 2.2 | 1.7 |
| | $K_2O/ZrO_2$ | - | 1660 | 1980 | 1980 | 1980 | 1980 | 2080 | 2180 | 1980 | 1980 | 2080 |
| | $TiO_2/(Li_2O+Na_2O+K_2O+MgG+CaO+SrO+BaO)$ | - | 1.0 | 0.8 | 0.9 | 0.9 | 1.0 | 0.8 | 0.7 | 0.8 | 0.7 | 0.7 |
| | $(Li_2O+Na_2O+K_2O+MgO+CaO+SrO+BaO)/SiO_2$ | - | 0.13 | 0.14 | 0.14 | 0.14 | 0.14 | 0.15 | 0.15 | 0.15 | 0.15 | 0.15 |
| Hydrolytic resistance (Hydrochloric acid consumption H) | ISO 720 (1985) | mL/g | Not measured | Not measured | Not measured | Not measured | Not measured | Not measured | Not measured | Not measured | Not measured | Not measured |
| | Class | - | Not measured | Not measured | Not measured | Not measured | Not measured | Not measured | Not measured | Not measured | Not measured | Not measured |
| Acid resistance (Elution evaluation QC, QO) | QC: $\Sigma$ eluted components (cation mass) | mg/dm² | Not measured | Not measured | Not measured | Not measured | Not measured | Not measured | Not measured | Not measured | Not measured | Not measured |
| | QO: $\Sigma$ eluted components (oxide mass) | mg/dm² | Not measured | Not measured | Not measured | Not measured | Not measured | Not measured | Not measured | Not measured | Not measured | Not measured |
| Alkali resistance (loss in mass p) | ISO 695 (199605-15) | mg/dm² | Not measured | Not measured | Not measured | Not measured | Not measured | Not measured | Not measured | Not measured | Not measured | Not measured |
| | Class | - | Not measured | Not measured | Not measured | Not measured | Not measured | Not measured | Not measured | Not measured | Not measured | Not measured |

| | | Unit | No. 71 | No. 72 | No. 73 | No. 74 | No. 75 | No. 76 | No. 77 | No. 78 | No. 79 | No. 80 |
|---|---|---|---|---|---|---|---|---|---|---|---|---|---|
| Chemical resistance factor value | H × 10 + QC × 10 + ρ | | Not measured | Not measured | Not measured | Not measured | Not measured | Not measured | Not measured | Not measured | Not measured | Not measured |
| Liquidus temperature | | °C | Not measured | Not measured | Not measured | Not measured | Not measured | Not measured | Not measured | Not measured | Not measured | Not measured |
| Thermal expansion coefficient | 20 to 300°C | $10^{-7}$/°C | Not measured | Not measured | Not measured | Not measured | Not measured | Not measured | Not measured | Not measured | Not measured | Not measured |
| | 30 to 300°C | | Not measured | Not measured | Not measured | Not measured | Not measured | Not measured | Not measured | Not measured | Not measured | Not measured |
| | 30 to 380°C | | Not measured | Not measured | Not measured | Not measured | Not measured | Not measured | Not measured | Not measured | Not measured | Not measured |
| Viscosity characteristics | $10^{2.5}$ dPa·s | °C | Not measured | Not measured | Not measured | Not measured | Not measured | Not measured | Not measured | Not measured | Not measured | Not measured |
| | $10^{3.0}$ dPa·s | | Not measured | Not measured | Not measured | Not measured | Not measured | Not measured | Not measured | Not measured | Not measured | Not measured |
| | $10^{4.0}$ dPa·s | | Not measured | Not measured | Not measured | Not measured | Not measured | Not measured | Not measured | Not measured | Not measured | Not measured |
| | Strain point | | Not measured | Not measured | Not measured | Not measured | Not measured | Not measured | Not measured | Not measured | Not measured | Not measured |
| | Annealing point | | Not measured | Not measured | Not measured | Not measured | Not measured | Not measured | Not measured | Not measured | Not measured | Not measured |
| | Softening point | | Not measured | Not measured | Not measured | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured | Not measured | Not measured | Not measured |

EP 4 227 274 A1

32

Table 9

| | | Unit | No. 81 | No. 82 | No. 83 | No. 84 | No. 85 | No. 86 | No. 87 | No. 88 | No. 89 | No. 90 |
|---|---|---|---|---|---|---|---|---|---|---|---|---|
| Glass composition | $SiO_2$ | mol% | 78.8 | 79.1 | 79.9 | 80.4 | 82.1 | 79.1 | 79.9 | 80.4 | 80.9 | 79.1 |
| | $B_2O_3$ | | 0.0 | 0.0 | 0.0 | 0.0 | 0.0 | 0.0 | 0.0 | 0.0 | 0.0 | 0.0 |
| | $Al_2O_3$ | | 0.0 | 0.0 | 0.0 | 0.0 | 0.0 | 0.0 | 0.0 | 0.0 | 0.0 | 0.0 |
| | $Li_2O$ | | 0.0 | 0.0 | 0.0 | 0.0 | 0.0 | 0.0 | 0.0 | 0.0 | 0.0 | 0.0 |
| | $Na_2O$ | | 0.0 | 0.0 | 0.0 | 0.0 | 0.0 | 8.9 | 8.6 | 8.6 | 8.6 | 6.0 |
| | $K_2O$ | | 9.3 | 9.0 | 8.7 | 8.7 | 7.5 | 0.1 | 0.1 | 0.1 | 0.1 | 3.0 |
| | MgO | | 0.0 | 0.0 | 0.0 | 0.0 | 0.0 | 0.0 | 0.0 | 0.0 | 0.0 | 0.0 |
| | CaO | | 1.0 | 1.0 | 1.0 | 1.0 | 1.0 | 1.0 | 1.0 | 1.0 | 1.0 | 1.0 |
| | SrO | | 0.0 | 0.0 | 0.0 | 0.0 | 0.0 | 0.0 | 0.0 | 0.0 | 0.0 | 0.0 |
| | BaO | | 0.0 | 0.0 | 0.0 | 0.0 | 0.0 | 0.0 | 0.0 | 0.0 | 0.0 | 0.0 |
| | $TiO_2$ | | 10.5 | 10.5 | 10.0 | 9.5 | 9.0 | 10.5 | 10.0 | 9.5 | 9.0 | 10.5 |
| | $ZrO_2$ | | 0.005 | 0.005 | 0.005 | 0.005 | 0.005 | 0.005 | 0.005 | 0.005 | 0.005 | 0.005 |
| | $Fe_2O_3$ | | Not measured | Not measured | Not measured | Not measured | Not measured | Not measured | Not measured | Not measured | Not measured | Not measured |
| | $SnO_2$ | | 0.1 | 0.1 | 0.1 | 0.1 | 0.1 | 0.1 | 0.1 | 0.1 | 0.1 | 0.1 |
| | $SO_3$ | | Not measured | Not measured | Not measured | Not measured | Not measured | Not measured | Not measured | Not measured | Not measured | Not measured |
| | ZnO | | Not measured | Not measured | Not measured | Not measured | Not measured | Not measured | Not measured | Not measured | Not measured | Not measured |
| | $HfO_2$ | | Not measured | Not measured | Not measured | Not measured | Not measured | Not measured | Not measured | Not measured | Not measured | Not measured |
| | $P_2O_5$ | | Not measured | Not measured | Not measured | Not measured | Not measured | Not measured | Not measured | Not measured | Not measured | Not measured |
| | $Y_2O_3$ | | Not measured | Not measured | Not measured | Not measured | Not measured | Not measured | Not measured | Not measured | Not measured | Not measured |

(continued)

| Glass composition | | Unit | No. 81 | No. 82 | No. 83 | No. 84 | No. 85 | No. 86 | No. 87 | No. 88 | No. 89 | No. 90 |
|---|---|---|---|---|---|---|---|---|---|---|---|---|
| Glass composition | F | mol% | 0.2 | 0.1 | 0.2 | 0.1 | 0.2 | 0.1 | 0.2 | 0.1 | 0.2 | 0.1 |
| | Cl | | 0.05 | 0.15 | 0.05 | 0.15 | 0.05 | 0.15 | 0.05 | 0.15 | 0.05 | 0.15 |
| | $Li_2O+Na_2O+K_2O$ | | 9.3 | 9.0 | 8.7 | 8.7 | 7.5 | 9.0 | 8.7 | 8.7 | 8.7 | 9.0 |
| | MgO+CaO+SrO+BaO | | 1.0 | 1.0 | 1.0 | 1.0 | 1.0 | 1.0 | 1.0 | 1.0 | 1.0 | 1.0 |
| | $K_2O/ZrO_2$ | - | 1860 | 1800 | 1740 | 1740 | 1500 | 20 | 20 | 20 | 20 | 600 |
| | $TiO_2/(Li_2O+Na_2O+K_2O+MgP+CaO+SrO+BaO)$ | - | 1.0 | 1.1 | 1.0 | 1.0 | 1.1 | 1.1 | 1.0 | 1.0 | 0.9 | 1.1 |
| | $(Li_2O+Na_2O+K_2O+MgO+CaO+SrO+BaO)/SiO_2$ | - | 0.13 | 0.13 | 0.12 | 0.12 | 0.10 | 0.13 | 0.12 | 0.12 | 0.12 | 0.13 |
| Hydrolytic resistance (Hydrochloric acid consumption H) | ISO 720 (1985) | mL/g | Not measured | Not measured | Not measured | Not measured | Not measured | Not measured | Not measured | Not measured | Not measured | Not measured |
| | Class | - | Not measured | Not measured | Not measured | Not measured | Not measured | Not measured | Not measured | Not measured | Not measured | Not measured |
| Acid resistance (Elution evaluation QC, QO) | QC: $\Sigma$ eluted components (cation mass) | mg/dm² | Not measured | Not measured | Not measured | Not measured | Not measured | Not measured | Not measured | Not measured | Not measured | Not measured |
| | QO: $\Sigma$ eluted components (oxide mass) | mg/dm² | Not measured | Not measured | Not measured | Not measured | Not measured | Not measured | Not measured | Not measured | Not measured | Not measured |
| Alkali resistance (loss in mass p) | ISO 695 (199605-15) | mg/dm² | Not measured | Not measured | Not measured | Not measured | Not measured | Not measured | Not measured | Not measured | Not measured | Not measured |
| | Class | - | Not measured | Not measured | Not measured | Not measured | Not measured | Not measured | Not measured | Not measured | Not measured | Not measured |

(continued)

| | | Unit | No. 81 | No. 82 | No. 83 | No. 84 | No. 85 | No. 86 | No. 87 | No. 88 | No. 89 | No. 90 |
|---|---|---|---|---|---|---|---|---|---|---|---|---|
| Chemical resistance factor value | $H \times 10 + QC \times 10 + \rho$ | | Not measured | Not measured | Not measured | Not measured | Not measured | Not measured | Not measured | Not measured | Not measured | Not measured |
| Liquidus temperature | | °C | Not measured | Not measured | Not measured | Not measured | Not measured | Not measured | Not measured | Not measured | Not measured | Not measured |
| Thermal expansion coefficient | 20 to 300°C | $10^{-7}/°C$ | Not measured | Not measured | Not measured | Not measured | Not measured | Not measured | Not measured | Not measured | Not measured | Not measured |
| | 30 to 300°C | | Not measured | Not measured | Not measured | Not measured | Not measured | Not measured | Not measured | Not measured | Not measured | Not measured |
| | 30 to 380°C | | Not measured | Not measured | Not measured | Not measured | Not measured | Not measured | Not measured | Not measured | Not measured | Not measured |
| Viscosity characteristics | $10^{2.5}$ dPa·s | °C | Not measured | Not measured | Not measured | Not measured | Not measured | Not measured | Not measured | Not measured | Not measured | Not measured |
| | $10^{3.0}$ dPa·s | | Not measured | Not measured | Not measured | Not measured | Not measured | Not measured | Not measured | Not measured | Not measured | Not measured |
| | $10^{4.0}$ dPa·s | | Not measured | Not measured | Not measured | Not measured | Not measured | Not measured | Not measured | Not measured | Not measured | Not measured |
| | Strain point | | Not measured | Not measured | Not measured | Not measured | Not measured | Not measured | Not measured | Not measured | Not measured | Not measured |
| | Annealing point | | Not measured | Not measured | Not measured | Not measured | Not measured | Not measured | Not measured | Not measured | Not measured | Not measured |
| | Softening point | | Not measured | Not measured | Not measured | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured | Not measured | Not measured | Not measured |

Table 10

| | | Unit | No. 91 | No. 92 | No. 93 | No. 94 | No. 95 | No. 96 | No. 97 | No. 98 | No. 99 | No. 100 |
|---|---|---|---|---|---|---|---|---|---|---|---|---|
| Glass composition | $SiO_2$ | mol% | 79.6 | 79.8 | 79.6 | 78.9 | 79.9 | 79.9 | 74.4 | 74.5 | 74.7 | 74.9 |
| | $B_2O_3$ | | 0.0 | 0.0 | 0.0 | 0.0 | 0.0 | 0.0 | 0.5 | 0.3 | 0.2 | 0.1 |
| | $Al_2O_3$ | | 0.0 | 0.0 | 0.0 | 0.0 | 0.0 | 0.0 | 0.5 | 0.4 | 0.3 | 0.2 |
| | $Li_2O$ | | 0.0 | 0.0 | 0.0 | 0.0 | 0.0 | 0.0 | 0.0 | 0.0 | 0.0 | 0.0 |
| | $Na_2O$ | | 6.0 | 4.0 | 1.0 | 0.0 | 0.0 | 1.5 | 0.0 | 0.0 | 0.0 | 0.0 |
| | $K_2O$ | | 3.0 | 4.8 | 8.0 | 8.5 | 8.0 | 6.0 | 9.9 | 10.0 | 10.0 | 10.0 |
| | $MgO$ | | 0.0 | 0.0 | 0.0 | 0.0 | 0.0 | 0.0 | 0.0 | 0.0 | 0.0 | 0.0 |
| | $CaO$ | | 1.0 | 1.0 | 1.0 | 1.7 | 1.7 | 2.2 | 1.2 | 1.2 | 1.2 | 1.3 |
| | $SrO$ | | 0.0 | 0.0 | 0.0 | 0.0 | 0.0 | 0.0 | 0.0 | 0.0 | 0.0 | 0.0 |
| | $BaO$ | | 0.0 | 0.0 | 0.0 | 0.0 | 0.0 | 0.0 | 0.0 | 0.0 | 0.0 | 0.0 |
| | $TiO_2$ | | 10.0 | 10.0 | 10.0 | 10.5 | 10.0 | 10.0 | 8.9 | 9.2 | 9.3 | 9.2 |
| | $ZrO_2$ | | 0.005 | 0.005 | 0.005 | 0.005 | 0.005 | 0.005 | 4.2 | 4.1 | 4.0 | 4.0 |
| | $Fe_2O_3$ | | Not measured | Not measured | Not measured | Not measured | Not measured | Not measured | Not measured | Not measured | Not measured | Not measured |
| | $SnO_2$ | | 0.1 | 0.1 | 0.1 | 0.1 | 0.1 | 0.1 | 0.1 | 0.1 | 0.1 | 0.1 |
| | $SO_3$ | | Not measured | Not measured | Not measured | Not measured | Not measured | Not measured | Not measured | Not measured | Not measured | Not measured |
| | $ZnO$ | | Not measured | Not measured | Not measured | Not measured | Not measured | Not measured | Not measured | Not measured | Not measured | Not measured |
| | $HfO_2$ | | Not measured | Not measured | Not measured | Not measured | Not measured | Not measured | Not measured | Not measured | Not measured | Not measured |
| | $P_2O_5$ | | Not measured | Not measured | Not measured | Not measured | Not measured | Not measured | Not measured | Not measured | Not measured | Not measured |
| | $Y_2O_3$ | | Not measured | Not measured | Not measured | Not measured | Not measured | Not measured | Not measured | Not measured | Not measured | Not measured |

| | | Unit | No. 91 | No. 92 | No. 93 | No. 94 | No. 95 | No. 96 | No. 97 | No. 98 | No. 99 | No. 100 |
|---|---|---|---|---|---|---|---|---|---|---|---|---|
| Glass composition | F | mol% | 0.2 | 0.1 | 0.2 | 0.1 | 0.2 | 0.1 | 0.1 | 0.2 | 0.1 | 0.2 |
| | Cl | | 0.05 | 0.15 | 0.05 | 0.15 | 0.05 | 0.15 | 0.15 | 0.05 | 0.15 | 0.05 |
| | $Li_2O+Na_2O+K_2O$ | | 9.0 | 8.8 | 9.0 | 8.5 | 8.0 | 7.5 | 10.0 | 10.0 | 10.0 | 10.0 |
| | $MgO+CaO+SrO+BaO$ | | 1.0 | 1.0 | 1.0 | 1.7 | 1.7 | 2.2 | 1.2 | 1.2 | 1.2 | 1.3 |
| | $K_2O/ZrO_2$ | - | 600 | 960 | 1600 | 1700 | 1600 | 1200 | 2.3 | 2.4 | 2.5 | 2.5 |
| | $TiO_2/(Li_2O+Na_2O+K_2O+MgP+CaO+SrO+BaO)$ | - | 1.0 | 1.0 | 1.0 | 1.0 | 1.0 | 1.0 | 0.8 | 0.8 | 0.8 | 0.8 |
| | $(Li_2O+Na_2O+K_2O+MgP+CaO+SrO+BaO)/SiO_2$ | - | 0.13 | 0.12 | 0.13 | 0.13 | 0.12 | 0.12 | 0.15 | 0.15 | 0.15 | 0.15 |
| Hydrolytic resistance (Hydrochloric acid consumption H) | ISO 720 (1985) | mL/g | Not measured | Not measured | Not measured | Not measured | Not measured | Not measured | Not measured | Not measured | Not measured | Not measured |
| | Class | - | Not measured | Not measured | Not measured | Not measured | Not measured | Not measured | Not measured | Not measured | Not measured | Not measured |
| Acid resistance (Elution evaluation QC, QO) | QC: $\Sigma$ eluted components (cation mass) | mg/dm$^2$ | Not measured | Not measured | Not measured | Not measured | Not measured | Not measured | Not measured | Not measured | Not measured | Not measured |
| | QO: $\Sigma$ eluted components (oxide mass) | mg/dm$^2$ | Not measured | Not measured | Not measured | Not measured | Not measured | Not measured | Not measured | Not measured | Not measured | Not measured |
| Alkali resistance (loss in mass p) | ISO 695 (199605-15) | mg/dm$^2$ | Not measured | Not measured | Not measured | Not measured | Not measured | Not measured | Not measured | Not measured | Not measured | Not measured |
| | Class | - | Not measured | Not measured | Not measured | Not measured | Not measured | Not measured | Not measured | Not measured | Not measured | Not measured |

(continued)

| | Unit | No. 91 | No. 92 | No. 93 | No. 94 | No. 95 | No. 96 | No. 97 | No. 98 | No. 99 | No. 100 |
|---|---|---|---|---|---|---|---|---|---|---|---|
| Chemical resistance factor value H × 10 + QC × 10 + ρ | | Not measured | Not measured | Not measured | Not measured | Not measured | Not measured | Not measured | Not measured | Not measured | Not measured |
| Liquidus temperature | °C | Not measured | Not measured | Not measured | Not measured | Not measured | Not measured | Not measured | Not measured | Not measured | Not measured |
| Thermal expansion coefficient 20 to 300°C | $10^{-7}$/°C | Not measured | Not measured | Not measured | Not measured | Not measured | Not measured | Not measured | Not measured | Not measured | Not measured |
| 30 to 300°C | | Not measured | Not measured | Not measured | Not measured | Not measured | Not measured | Not measured | Not measured | Not measured | Not measured |
| 30 to 380°C | | Not measured | Not measured | Not measured | Not measured | Not measured | Not measured | Not measured | Not measured | Not measured | Not measured |
| Viscosity characteristics $10^{2.5}$ dPa·s | °C | Not measured | Not measured | Not measured | Not measured | Not measured | Not measured | Not measured | Not measured | Not measured | Not measured |
| $10^{3.0}$ dPa·s | | Not measured | Not measured | Not measured | Not measured | Not measured | Not measured | Not measured | Not measured | Not measured | Not measured |
| $10^{4.0}$ dPa·s | | Not measured | Not measured | Not measured | Not measured | Not measured | Not measured | Not measured | Not measured | Not measured | Not measured |
| Strain point | | Not measured | Not measured | Not measured | Not measured | Not measured | Not measured | Not measured | Not measured | Not measured | Not measured |
| Annealing point | | Not measured | Not measured | Not measured | Not measured | Not measured | Not measured | Not measured | Not measured | Not measured | Not measured |
| Softening point | | Not measured | Not measured | Not measured | Not measured | Not measured | Not measured | Not measured | Not measured | Not measured | Not measured |
| Average transmittance (thickness: 1 mm) 400 to 800 nm | % | Not measured | Not measured | Not measured | Not measured | Not measured | Not measured | Not measured | Not measured | Not measured | Not measured |

Table 11

| Glass composition | | Unit | No. 101 | No. 102 | No. 103 | No. 104 | No. 105 | No. 106 | No. 107 |
|---|---|---|---|---|---|---|---|---|---|
| | $SiO_2$ | mol% | 75.0 | 75.0 | 73.3 | 79.0 | 79.4 | 73.9 | 73.9 |
| | $B_2O_3$ | | 0.0 | 0.0 | 1.0 | 0.8 | 0.6 | 0.4 | 1.0 |
| | $Al_2O_3$ | | 0.2 | 0.1 | 1.0 | 0.8 | 0.6 | 1.0 | 0.4 |
| | $Li_2O$ | | 0.0 | 0.0 | 0.0 | 0.0 | 0.0 | 3.0 | 5.0 |
| | $Na_2O$ | | 0.0 | 0.0 | 0.2 | 2.0 | 1.0 | 0.0 | 0.0 |
| | $K_2O$ | | 10.1 | 9.9 | 9.8 | 6.5 | 7.5 | 7.0 | 5.0 |
| | $MgO$ | | 0.0 | 0.0 | 0.0 | 0.0 | 0.0 | 0.0 | 0.0 |
| | $CaO$ | | 1.1 | 1.6 | 1.2 | 0.7 | 0.7 | 1.2 | 1.2 |
| | $SrO$ | | 0.0 | 0.0 | 0.0 | 0.0 | 0.0 | 0.0 | 0.0 |
| | $BaO$ | | 0.0 | 0.0 | 0.0 | 0.0 | 0.0 | 0.0 | 0.0 |
| | $TiO_2$ | | 9.4 | 9.2 | 9.0 | 6.4 | 6.4 | 9.2 | 9.2 |
| | $ZrO_2$ | | 3.9 | 4.0 | 4.3 | 3.6 | 3.6 | 4.1 | 4.1 |
| | $Fe_2O_3$ | | Not measured | Not measured | Not measured | Not measured | Not measured | Not measured | Not measured |
| | $SnO_2$ | | 0.1 | 0.0 | 0.0 | 0.0 | 0.0 | 0.0 | 0.0 |
| | $SO_3$ | | Not measured | Not measured | Not measured | Not measured | Not measured | Not measured | Not measured |
| | $ZnO$ | | Not measured | Not measured | Not measured | Not measured | Not measured | Not measured | Not measured |
| | $HfO_2$ | | Not measured | Not measured | Not measured | Not measured | Not measured | Not measured | Not measured |
| | $P_2O_5$ | | Not measured | Not measured | Not measured | Not measured | Not measured | Not measured | Not measured |
| | $Y_2O_3$ | | Not measured | Not measured | Not measured | Not measured | Not measured | Not measured | Not measured |

(continued)

| | Unit | No. 101 | No. 102 | No. 103 | No. 104 | No. 105 | No. 106 | No. 107 |
|---|---|---|---|---|---|---|---|---|
| Glass composition — F | mol% | 0.1 | 0.2 | 0.1 | 0.1 | 0.2 | 0.1 | 0.1 |
| Cl | mol% | 0.15 | 0.05 | 0.15 | 0.15 | 0.05 | 0.15 | 0.15 |
| $Li_2O+Na_2O+K_2O$ | mol% | 10.1 | 0.1 | 1.2 | 2.8 | 1.6 | 4.0 | 5.4 |
| $MgO+CaO+SrO+BaO$ | mol% | 1.1 | 11.5 | 11.0 | 7.2 | 8.2 | 8.2 | 6.2 |
| $K_2O/ZrO_2$ | - | 2.6 | 0 | 0.02 | 0.31 | 0.16 | 0 | 0 |
| $TiO_2/(Li_2O+Na_2O+K_2O+MgO+CaO+SrO+BaO)$ | - | 0.8 | 0.0 | 0.0 | 0.0 | 0.0 | 0.0 | 0.0 |
| $(Li_2O+Na_2O+K_2O+MgO+CaO+SrO+BaO)/SiO_2$ | - | 0.15 | 0.15 | 0.17 | 0.13 | 0.12 | 0.17 | 0.16 |
| Hydrolytic resistance (Hydrochloric acid consumption H) ISO 720(1985) | mL/g | Not measured | Not measured | Not measured | Not measured | Not measured | Not measured | Not measured |
| Class | - | Not measured | Not measured | Not measured | Not measured | Not measured | Not measured | Not measured |
| Acid resistance (Elution evaluation QC, QO) QC: Σ eluted components (cation mass) | mg/dm² | Not measured | Not measured | Not measured | Not measured | Not measured | Not measured | Not measured |
| QO: Σ eluted components (oxide mass) | mg/dm² | Not measured | Not measured | Not measured | Not measured | Not measured | Not measured | Not measured |
| Alkali resistance (loss in mass p) ISO 695(199605-15) | mg/dm² | Not measured | Not measured | Not measured | Not measured | Not measured | Not measured | Not measured |
| Class | - | Not measured | Not measured | Not measured | Not measured | Not measured | Not measured | Not measured |
| Chemical resistance factor value $H \times 10 + QC \times 10 + \rho$ | - | Not measured | Not measured | Not measured | Not measured | Not measured | Not measured | Not measured |
| Liquidus temperature | °C | Not measured | Not measured | Not measured | Not measured | Not measured | Not measured | Not measured |

| | | Unit | No. 101 | No. 102 | No. 103 | No. 104 | No. 105 | No. 106 | No. 107 |
|---|---|---|---|---|---|---|---|---|---|
| Thermal expansion coefficient | 20 to 300°C | $10^{-7}/°C$ | Not measured | Not measured | Not measured | Not measured | Not measured | Not measured | Not measured |
| | 30 to 300°C | | Not measured | Not measured | Not measured | Not measured | Not measured | Not measured | Not measured |
| | 30 to 380°C | | Not measured | Not measured | Not measured | Not measured | Not measured | Not measured | Not measured |
| Viscosity characteristics | $10^{2.5}$ dPa·s | °C | Not measured | Not measured | Not measured | Not measured | Not measured | Not measured | Not measured |
| | $10^{3.0}$ dPa·s | | Not measured | Not measured | Not measured | Not measured | Not measured | Not measured | Not measured |
| | $10^{4.0}$ dPa·s | | Not measured | Not measured | Not measured | Not measured | Not measured | Not measured | Not measured |
| | Strain point | | Not measured | Not measured | Not measured | Not measured | Not measured | Not measured | Not measured |
| | Annealing point | | Not measured | Not measured | Not measured | Not measured | Not measured | Not measured | Not measured |
| | Softening point | | Not measured | Not measured | Not measured | Not measured | Not measured | Not measured | Not measured |
| Average transmittance (thickness: 1 mm) | 400 to 800 nm | % | Not measured | Not measured | Not measured | Not measured | Not measured | Not measured | Not measured |

Production of Evaluation Glass

Various glass raw materials (500 g of glass) were compounded and mixed in accordance with each glass composition, thus a batch of raw materials was prepared. The batch of raw materials was placed in a 300-cc platinum crucible, and melted in an electric furnace heated to 1600°C. The melting time was 20 hours, and the molten glass was stirred 1 hour after placing the whole batch of raw materials in the crucible, and stirred 4 hours before pouring the batch. After completion of the second stirring, the temperature of the electric furnace was raised to 1650°C, and fining was conducted. Thereafter, the molten glass was poured onto a carbon plate, and the resultant glass was formed into a sheet shape having a thickness of 5 mm while the glass was rapidly cooled using a metal roller or was formed into an ingot shape having a thickness of 15 mm. Then, samples were produced.

Measurement of Hydrochloric Acid Consumption H

The hydrochloric acid consumption of each of the samples was measured as follows. The surfaces of the samples were carefully wiped with ethanol, and the samples were ground with an alumina pestle in a mortar, and then classified using three stainless steel sieves with openings of 710 $\mu$m, 425 $\mu$m, and 300 $\mu$m. The glass powder remaining on the 300 $\mu$m sieve was collected, and the glass remaining on the 710 $\mu$m and 425 $\mu$m sieves was ground again. The same operation was repeated until the amount of the glass powder on the 300 $\mu$m sieve reached 10 g or greater. The glass powder remaining on the 300 $\mu$m sieve was transferred to a beaker, 30 mL of acetone was poured, and ultrasonic cleaning was performed for 1 minute. The supernatant liquid was discarded and the same operation was repeated five times. Thereafter, an operation of pouring 30 mL of acetone into a beaker and gently shaking the beaker with a hand to discard only the supernatant liquid was repeated three times. The mouth of the beaker was covered with an aluminum foil, a plurality of holes was made in the foil, and then the beaker was dried in an oven at 120°C for 20 minutes. After that, the glass powder was taken out and cooled in a desiccator for 30 minutes. The resulting glass powder was weighed to 10 g $\pm$ 0.0005 g using an electronic balance and placed in a 250 mL quartz flask, and then 50 mL extra pure water was added thereto. A quartz flask filled with only 50 mL of extra pure water was also prepared as a blank. The mouth of the quartz flask was covered with a quartz container, the quartz flask was placed in an autoclave and held at 100°C for 10 minutes, and then heat treatment was performed at 121°C for 30 minutes. At this time, the temperature was raised from 100°C to 121°C at 1°C/min, and cooled from 121°C to 100°C at 0.5°C/min. The quartz flask was cooled down to 95°C and taken out. The flask was allowed to stand on a tray containing extra pure water, and cooled for 30 minutes. After cooling, the eluate in the quartz flask was transferred to a conical beaker. 15 mL of extra pure water collected with a transfer pipette was poured into the flask, the flask was gently shaken, and only the supernatant liquid was poured into the conical beaker. The same operation was repeated twice. The blank was also subjected to the same operation to form an eluate. 0.05 mL of a methyl red solution was added dropwise to the eluate. 0.02 mol/L of hydrochloric acid was added dropwise to the eluate of the sample, and the hydrochloric acid consumption when the color of the eluate became the same as that of the blank was recorded. Then, the hydrochloric acid consumption H (mL/g) per 1 g of glass was calculated.

Measurement of Acid Resistance

The detailed experimental procedure of the acid resistance test is as follows. First, a sample having a total surface area of 25 to 30 $cm^2$ and having all glass surfaces mirror-polished was prepared. As pretreatment, the sample was immersed in a solution prepared by mixing hydrofluoric acid (40 mass%) and hydrochloric acid (2 mol/L) at a volume ratio of 1 : 9, and stirred with a magnetic stirrer for 10 minutes. The sample was then taken out and the length of the sample was measured. Thereafter, ultrasonic cleaning in extra pure water for 1 minute was performed three times, and ultrasonic cleaning in ethanol for 1 minute was performed two times. The sample was then dried in an oven at 110°C for 1 hour and cooled in a desiccator for 30 minutes. Subsequently, 65 mL of 6 mol/L hydrochloric acid was put in a 120 mL PTFE airtight container, the PTFE container was closed with a lid and placed in an oven set at 120°C, and preheated for 90 minutes. Thereafter, the Teflon container containing hydrochloric acid was taken out, the lid was removed, and the sample was immersed in the hydrochloric acid solution at high temperature. Then, the lid was closed, and the container was returned to the oven again. The sample was held at 120 $\pm$ 2°C for 6 hours. After 6 hours, the PTFE container was taken out from the oven, the lid was quickly removed, and the sample was taken out using tweezers made of resin. Then, the lid was closed, and the container was cooled to room temperature. The mass B (g) of the resulting hydrochloric acid was measured, and the concentration analysis values $C_n$ ($\mu$g/mL) in respective components in the eluate was analyzed by ICP emission spectrometry. The total cation mass QC (mg/$dm^2$) of eluted components per unit area was calculated based on the total surface area A$cm^2$ of the sample according to the following Equation 1. Further, the total oxide mass QO (mg/$dm^2$) of eluted components per unit area was calculated by the following Equation 2, under the assumption that the eluted components are oxides.

[Equation 1] Total cation mass of eluted components per unit area QC = B/10/A/d × ∑Cn, where A refers to a total surface area (cm$^2$) of the sample, B refers to a hydrochloric acid mass (g) resulted from the test, $C_n$ refers to concentration analysis values (μg/mL) of respective components in the solution, ∑$C_n$ refers to the sum of the concentration analysis values (μg/mL) of respective components in the solution, d refers to a hydrochloric acid density (g/cm$^3$) resulted from the test, × refers to multiplication, and / refers to division.

[Equation 2] Total oxide mass of eluted components per unit area QO = B/10/A/d × ∑{Cn × $E_n$/$F_n$/$M_n$}, A refers to a total surface area (cm$^2$) of the sample, B refers to a hydrochloric acid mass (g) resulted from the test, $C_n$ refers to concentration analysis values (μg/mL) of respective components in the solution, d refers to a hydrochloric acid density (g/cm$^3$) resulted from the test, $E_n$ refers to an oxide formula weight of cations in the eluted components (in the case of Si, formula weight of SiOz), $F_n$ represents the eluted components as oxides and refers to a mol ratio of cation contents in the eluted components, when a substance amount of an oxide is 1 mol, (e.g., in the case of Si, SiOz: 1, in the case of K, $K_2O$: 2), $M_n$ refers to an atomic weight of cations in the eluted components, ∑{Cn × $E_n$/$F_n$/$M_n$} refers to addition of a value resulted from multiplication of Cn by $E_n$, and division by $F_n$ and by $M_n$ for each component, × refers to multiplication, and / refers to division.

Measurement of Alkali Resistance

The alkali resistance was evaluated by a method in accordance with ISO 695 (1991). The detailed test procedure is as follows. First, a sample having a total surface area of 15 cm$^2$ and having all glass surfaces mirror-polished was prepared. As pretreatment, the sample was immersed in a solution produced by mixing hydrofluoric acid (40 mass%) and hydrochloric acid (2 mol/L) at a volume ratio of 1 : 9, and stirred with a magnetic stirrer for 10 minutes. The sample was then taken out and the length of the sample was measured. Thereafter, ultrasonic cleaning in extra pure water for 1 minute was performed three times, and ultrasonic cleaning in ethanol for 1 minute was performed two times. The sample was then dried in an oven at 110°C for 1 hour and cooled in a desiccator for 30 minutes. The mass mi of the sample thus produced was measured up to an accuracy of ± 0.1 mg and recorded. Subsequently, 800 mL of a solution prepared by mixing 1 mol/L of sodium hydroxide solution and 0.5 mol/L of sodium carbonate solution at a volume ratio of 1 : 1 was placed in a stainless steel container, and heated to boiling using an electric heater. The sample hung with a platinum wire was put in the container and held for 3 hours. To prevent a decrease in fluid volume during the test, the opening of a lid of the container was plugged up with a gasket and a cooling tube. Thereafter, the sample was taken out and immersed three times in a beaker containing 500 mL of 1 mol/L hydrochloric acid. Then, ultrasonic cleaning in extra pure water for 1 minute was performed three times, and ultrasonic cleaning in ethanol for 1 minute was performed two times. Further, the washed sample was dried in an oven at 110°C for 1 hour and cooled in a desiccator for 30 minutes. The mass $m_2$ of the sample thus treated was measured up to an accuracy of ± 0.1 mg and recorded. Finally, the loss in mass p (mg/dm$^2$) per unit area was calculated based on the masses mi (mg) and $m_2$ (mg) of the sample before and after placing it into the boiling solution as well as the total surface area A (cm$^2$) of the sample according to Equation 3.

$$[\text{Equation 3}] \text{ loss in mass } \rho \text{ per unit area} = 100 \times (m_1-m_2)/A$$

Method for Calculating Chemical Resistance Factor Value

The chemical resistance factor value was calculated by the following Equation 4 using the hydrochloric acid consumption H based on hydrolytic resistance in accordance with ISO 720, the total cation mass QC (mg/dm$^2$) of eluted components per unit surface area in an elution test on an acidic solution, and the loss in mass p per unit area in an alkali resistance test in accordance with ISO 695. In addition, as the acid resistance score in calculating the chemical resistance factor value, QC (mg/dm$^2$) was used.

$$[\text{Equation 4}] \text{ Chemical resistance factor value} = H \times 10 + QC \times 10 + \rho$$

Measurement of Liquidus Temperature

The measurement of the liquidus temperature is as follows. A platinum boat of about 120 × 20 × 10 mm was filled with a ground sample and was put into an electric furnace having a linear temperature gradient for 24 hours. Thereafter, a crystal precipitation site was identified by microscope observation, a temperature corresponding to the crystal precipitation site was calculated from a temperature gradient graph of the electric furnace, and this temperature was set as the liquidus temperature.

Measurement of Thermal Expansion Coefficient

A sample processed into a size of 20 mm × 5 mmφ was used, and the linear thermal expansion coefficient was evaluated based on the average linear thermal expansion coefficient measured in the temperature range shown in each table. The measurement was performed using a Dilatometer, manufactured by NETZSCH.

Measurement of Low-Temperature Viscosity

The strain point, annealing point, and softening point were measured by a fiber elongation method.

Measurement of Viscosity in High Temperature

The viscosity in high temperature was measured by a platinum sphere pull up method. A viscosity curve of the glass was determined from the viscosity in high temperature and the Vogel-Fulcher-Tammann equation, and temperatures corresponding to $10^{2.5}$ dPa·s, $10^{3.0}$ dPa·s, and $10^{4.0}$ dPa·s were determined from this viscosity curve.

Measurement of Transmittance

Tube glasses having a thickness of 1 mm were processed into a strip shape, and the transmittance at 400 to 800 nm was measured using a spectrophotometer. The used measuring device was a spectrophotometer V-670 (equipped with an integrating sphere), manufactured by JASCO Corporation.

As can be seen from Tables 1 to 11, in Samples 1 to 14, 16 to 28, and 30 to 107, the glass composition was substantially free of $B_2O_3$ and $Al_2O_3$, and the chemical resistance factor value was small. Meanwhile, Sample Nos. 15 and 29 did not contain ZrOz in the glass composition, and thus had low alkali resistance.

Fig. 1 is a graph in which a horizontal axis represents mol% of $SiO_2$ in various types of glass, and a vertical axis represents a total cation mass QC ($mg/dm^2$) of eluted components per unit area. As can be seen from Fig. 1, there was a correlation between the mol% of $SiO_2$ and the QC, and when the mol% of $SiO_2$ was large, the QC decreases and the acid resistance improves.

INDUSTRIAL APPLICABILITY

The tube glass and the alkali silicate glass of the present invention can be preferably used in primary packaging containers for pharmaceutical preparations, such as ampules, vials, prefilled syringes, and cartridges. Further, the tube glass and the alkali silicate glass can be used as a laboratory instrument such as a beaker or a flask. Furthermore, the tube glass and the alkali silicate glass can be used as an inner wall material of a corrosion-resistant piping in a chemical plant requiring corrosion resistance. Additionally, the alkali silicate glass according to an embodiment of the present invention can be used for various applications requiring alkali resistance besides the above applications.

**Claims**

1. A tube glass comprising an alkali silicate glass, wherein a glass composition is substantially free of $B_2O_3$ and $Al_2O_3$, and a loss in mass p ($mg/dm^2$) in an alkali resistance test in accordance with ISO 695 (199105-15) is classified as Class A1.

2. The tube glass according to claim 1, wherein a total cation mass QC ($mg/dm^2$) of eluted components per unit surface area in an elution test on an acidic solution is 1.6 or less.

3. The tube glass according to claim 1 or 2, wherein a hydrochloric acid consumption H (mL/g) to neutralize an eluate prepared by elution of an alkali component, determined in accordance with ISO 720 (1985), is classified as Class HGA1 or HGA2 in ISO 720 (1985).

4. The tube glass according to any one of claims 1 to 3, wherein the glass composition contains, in mol%, 50 to 88% of SiOz, 0.1 to 20% of LiaO+$Na_2O$+$K_2O$, 0 to 20% of TiOz, and 0.005 to 12% of $ZrO_2$; and is substantially free of $B_2O_3$ and $Al_2O_3$.

5. The tube glass according to any one of claims 1 to 4, wherein a content of $Na_2O$ in the glass composition is from 0 to 20 mol%.

6. The tube glass according to any one of claims 1 to 5, wherein a content of $K_2O$ in the glass composition is from 0 to 20 mol%.

7. The tube glass according to any one of claims 1 to 6, wherein a content of MgO+CaO+SrO+BaO in the glass composition is from 0.1 to 10 mol%.

8. The tube glass according to any one of claims 1 to 7, wherein an average transmittance at an optical path length of 1 mm and a wavelength of 400 to 800 nm is 60% or greater.

9. The tube glass according to any one of claims 1 to 8, wherein a chemical resistance factor value, represented by {(a hydrochloric acid consumption H (mL/g) in a hydrolytic resistance test in accordance with ISO 720) $\times$ 10 + (a total cation mass QC of eluted components per unit surface area in an elution test on an acidic solution) $\times$ 10 + (the loss in mass p in the alkali resistance test in accordance with ISO 695)}, is 98.5 or less.

10. The tube glass according to any one of claims 1 to 9, wherein the tube glass is for use in a primary packaging material for pharmaceutical preparations, a laboratory instrument, and a corrosion-resistant piping for chemical plants.

11. A primary packaging container for pharmaceutical preparations which is formed by processing the tube glass according to any one of claims 1 to 10.

12. An alkali silicate glass comprising a glass composition which is substantially free of $B_2O_3$ and $Al_2O_3$, wherein a chemical resistance factor value, represented by {(a hydrochloric acid consumption H (mL/g) in a hydrolytic resistance test in accordance with ISO 720) $\times$ 10 + (a total cation mass QC of eluted components per unit surface area in an elution test on an acidic solution) $\times$ 10 + (a loss in mass p in an alkali resistance test in accordance with ISO 695)}, is 98.5 or less.

13. An alkali silicate glass comprising a glass composition which contains, in mol%, 60 to 88% of SiOz, 0.1 to 20% of KzO, 0 to 6.5% of CaO, 0.1 to 20% of TiOz, and 0.005 to 12% of $ZrO_2$; has a molar ratio $TiO_2$/($Li_2O+Na_2O+K_2O+MgO+CaO+SrO+BaO$) of 0.3 to 3.5 and a molar ratio $K_2O/ZrO_2$ of 0.9 or greater; and is substantially free of $B_2O_3$ and $Al_2O_3$.

14. The alkali silicate glass according to claim 12 or 13, wherein the loss in mass p (mg/dm$^2$) in the alkali resistance test in accordance with ISO 695 (199105-15) is classified as Class A1.

15. The alkali silicate glass according to any one of claims 12 to 14, wherein the total cation mass QC (mg/dm$^2$) of eluted components per unit surface area in the elution test on the acidic solution is 1.6 or less.

16. The alkali silicate glass according to any one of claims 12 to 15, wherein the hydrochloric acid consumption H (mL/g) to neutralize an eluate prepared by elution of an alkali component, determined in accordance with ISO 720 (1985), is classified as Class HGA1 or HGA2 in ISO 720 (1985).

17. An alkali silicate glass comprising a glass composition which is substantially free of $B_2O_3$ and $Al_2O_3$, wherein a chemical resistance factor value, represented by {(a hydrochloric acid consumption H (mL/g) in a hydrolytic resistance test in accordance with ISO 720) $\times$ 10 + (a total cation mass QC of eluted components per unit surface area in an elution test on an acidic solution) $\times$ 10 + (a loss in mass p in an alkali resistance test in accordance with ISO 695)}, is 98.5 or less.

18. An alkali silicate glass comprising a glass composition which is substantially free of $B_2O_3$ and $Al_2O_3$; contains, in mol%, 66% or greater and less than 84% of SiOz, 10% or less of MgO+CaO+SrO+BaO, and 8.5% or less of ZrOz; and has a molar ratio ($Li_2O+Na_2O+K_2O+MgO+CaO+SrO+BaO$)/$SiO_2$ of 0.4 or less.

19. The alkali silicate glass according to claim 17 or 18, wherein the loss in mass p (mg/dm$^2$) in the alkali resistance test in accordance with ISO 695 (199105-15) is classified as Class A1.

20. The alkali silicate glass according to any one of claims 17 to 19, wherein the total cation mass QC (mg/dm$^2$) of eluted components per unit surface area in the elution test on the acidic solution is 1.6 or less.

21. The alkali silicate glass according to any one of claims 17 to 20, wherein the hydrochloric acid consumption H (mL/g) to neutralize an eluate prepared by elution of an alkali component, determined in accordance with ISO 720 (1985), is classified as Class HGA1 or HGA2 in ISO 720 (1985).

22. An alkali silicate glass comprising a glass composition which contains 1% or less of $B_2O_3$ and 1% or less of $Al_2O_3$, wherein a chemical resistance factor value, represented by {(a hydrochloric acid consumption H (mL/g) in a hydrolytic resistance test in accordance with ISO 720) $\times$ 10 + (a total cation mass QC of eluted components per unit surface area in an elution test on an acidic solution) $\times$ 10 + (a loss in mass p in an alkali resistance test in accordance with ISO 695)}, is 98.5 or less.

23. An alkali silicate glass comprising a glass composition which contains, in mol%, 66% or greater and less than 84% of SiOz, 1% or less of $B_2O_3$, 1% or less of $Al_2O_3$, 10% or less of MgO+CaO+SrO+BaO, and 8.5% or less of ZrOz; and has a molar ratio $(Li_2O+Na_2O+K_2O+MgO+CaO+SrO+BaO)/SiO_2$ of 0.4 or less.

24. The alkali silicate glass according to claim 22 or 23, wherein the loss in mass p (mg/dm$^2$) in the alkali resistance test in accordance with ISO 695 (199105-15) is classified as Class A1.

25. The alkali silicate glass according to any one of claims 22 to 24, wherein the total cation mass QC (mg/dm$^2$) of eluted components per unit surface area in the elution test on the acidic solution is 1.6 or less.

26. The alkali silicate glass according to any one of claims 22 to 25, wherein the hydrochloric acid consumption H (mL/g) to neutralize an eluate prepared by elution of an alkali component, determined in accordance with ISO 720 (1985), is classified as Class HGA1 or HGA2 in ISO 720 (1985).

*FIG. 1*

Relationship between $SiO_2$ mol% and acid resistance (QC)

## INTERNATIONAL SEARCH REPORT

| International application No. |
| --- |
| **PCT/JP2021/036097** |

| A. | CLASSIFICATION OF SUBJECT MATTER |
| --- | --- |

*C03C 3/078*(2006.01)i; *A61J 1/05*(2006.01)i; *B65D 1/00*(2006.01)i; *B65D 1/09*(2006.01)i
FI:    C03C3/078; A61J1/05 311; B65D1/00 110; B65D1/09

According to International Patent Classification (IPC) or to both national classification and IPC

| B. | FIELDS SEARCHED |
| --- | --- |

Minimum documentation searched (classification system followed by classification symbols)

C03C1/00-14/00; A61J1/05; B65D1/00; B65D1/09

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

INTERGLAD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2015-093820 A (NIPPON ELECTRIC GLASS CO., LTD.) 18 May 2015 (2015-05-18) claims, table 1, examples 1, 2 | 1-6, 8-12, 14-17, 19-22, 24-26 |
| A | | 7 |
| X | EP 0146187 A1 (N. V. PHILIPS' GLOEILAMPENFABRIEKEN) 26 June 1985 (1985-06-26) claims, specification, page 1, lines 8, 9, tables, examples II, IV | 1-6, 8-9, 12, 14-17, 19-22, 24-26 |
| A | | 7 |
| X | JP 08-104536 A (OHARA INC.) 23 April 1996 (1996-04-23) claims, table 1, examples 3, 7 | 12-17, 22 |
| X | JP 2020-100547 A (SCHOTT GLASS TECHNOLOGIES (SUZHOU) CO., LTD.) 02 July 2020 (2020-07-02) claims, tables 1, 2, example S2 | 12, 17-18, 20-23, 25-26 |
| X | JP 06-157072 A (NIPPON ELECTRIC GLASS CO., LTD.) 03 June 1994 (1994-06-03) claims, paragraph [0001], table 1, example 6 | 12, 14-26 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 November 2021** | **14 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2021/036097** |

**C.** **DOCUMENTS CONSIDERED TO BE RELEVANT**

| Category* | Citation of document, with indication, where appropriate, of the relevant passages | Relevant to claim No. |
| --- | --- | --- |
| X | JP 2010-507557 A (SAINT-GOBAIN VETROTEX FRANCE) 11 March 2010 (2010-03-11) claims, paragraph [0001], table 1, example 9 | 12, 14-26 |

Form PCT/ISA/210 (second sheet) (January 2015)

## INTERNATIONAL SEARCH REPORT
### Information on patent family members

International application No.

**PCT/JP2021/036097**

| Patent document cited in search report | | | Publication date (day/month/year) | Patent family member(s) | | | Publication date (day/month/year) |
|---|---|---|---|---|---|---|---|
| JP | 2015-093820 | A | 18 May 2015 | (Family: none) | | | |
| EP | 0146187 | A1 | 26 June 1985 | NL | 8304360 | A | |
| JP | 08-104536 | A | 23 April 1996 | CN | 1126704 | A | |
| JP | 2020-100547 | A | 02 July 2020 | EP | 3673773 | A1 | |
| | | | | claims, tables 1, 2, example S2 | | | |
| | | | | US | 2020/0196785 | A1 | |
| | | | | WO | 2020/136132 | A1 | |
| | | | | CN | 111345657 | A | |
| | | | | KR | 10-2020-0079435 | A | |
| | | | | CA | 3065876 | A1 | |
| JP | 06-157072 | A | 03 June 1994 | (Family: none) | | | |
| JP | 2010-507557 | A | 11 March 2010 | US | 2010/015233 | A1 | |
| | | | | claims, paragraph [0001], table 1, example 9 | | | |
| | | | | WO | 2008/050069 | A2 | |
| | | | | FR | 2907777 | A1 | |
| | | | | CN | 101553441 | A | |
| | | | | RU | 2009119558 | A | |
| | | | | MX | 2009004482 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017218353 A
- JP 6400168 B